# EUROPEAN PATENT APPLICATION

(11) **EP 4 742 006 A1**
(43) Date of publication of application: **13.05.2026**
(21) Application number: 24854414.0
(22) Date of filing: 09.08.2024
(51) Int. Cl.: G06F 3/01, G02B 27/01, G06F 3/00, G06V 10/10, G06V 40/20

(54) **HEAD-MOUNTED DISPLAY DEVICE FOR DISPLAYING INTERFACE, AND OPERATION METHOD OF HEAD-MOUNTED DISPLAY DEVICE**

(30) Priority: 11.08.2023 KR 20230105667
(71) Applicant: Samsung Electronics Co., Ltd., Suwon-si, Gyeonggi-do 16677 (KR)
(72) Inventor: KIM, Jiin, Suwon-si, Gyeonggi-do 16677 (KR); KWAK, Junho, Suwon-si, Gyeonggi-do 16677 (KR); CHO, Sungwoo, Suwon-si, Gyeonggi-do 16677 (KR)
(74) Representative: Appleyard Lees IP LLP
(86) International application number: PCT/KR2024/011889
(87) International publication number: WO 2025/037863

(57) **Abstract**

The present disclosure includes a head-mounted display device and operation method thereof, the head-mounted display device including a camera, a display, memory storing at least one instruction, and at least one processor, wherein the at least one processor is configured to execute the at least one instruction to cause the head-mounted display device to display a first interface through the display, obtain an image of a user captured through the camera, detect a pose of the user based on the obtained image, compare the detected pose with a plurality of poses respectively preset to correspond to a plurality of interfaces, and based on the detected pose corresponding to a second interface that is one of the plurality of interfaces, display the second interface through the display by replacing the first interface.

## Description

### Technical Field

The present disclosure relates to a head-mounted display device and an operation method of the head-mounted display device. Specifically, the present disclosure relates to a head-mounted display device for displaying an interface, and an operation method of the head-mounted display device.

### Background Art

With advancements in technology, head-mounted display devices have been developed that provide images to a user through a display positioned close to the user's eyes while being worn on the user's head.

A display included in a head-mounted display device may include an optical see-through display for overlaying a virtual image onto a real-world physical environment space or a real-world object to show them together, or a video see-through display for displaying images of a real-world physical environment space captured by using cameras or the like and presenting the images to the user.

Recently, technology has been developed that provides, via an interface, a user input to images provided through a head-mounted display device.

### Disclosure of Invention

### Solution to Problem

According to an embodiment of the present disclosure, a head-mounted display device is provided. The head-mounted display device may include a camera. The head-mounted display device may include a display. The head-mounted display device may include memory storing at least one instruction and at least one processor. The at least one processor may be configured to execute the at least one instruction to cause the head-mounted display device to display a first interface through the display. The at least one processor may be configured to execute the at least one instruction to cause the head-mounted display device to obtain an image of a user captured through the camera. The at least one processor may be configured to execute the at least one instruction to cause the head-mounted display device to detect a pose of the user based on the obtained image. The at least one processor may be configured to execute the at least one instruction to cause the head-mounted display device to compare the detected pose with a plurality of poses respectively preset to correspond to a plurality of interfaces. The at least one processor may be configured to execute the at least one instruction to cause the head-mounted display device to, based on the detected pose corresponding to a second interface that is one of the plurality of interfaces, display the second interface through the display by replacing the first interface.

According to an embodiment of the present disclosure, an operation method of a head-mounted display device is provided. The operation method of the head-mounted display device may include obtaining an image of a user captured through a camera. The operation method of the head-mounted display device may include detecting a pose of the user based on the obtained image. The operation method of the head-mounted display device may include comparing the detected pose with a plurality of poses respectively preset to correspond to a plurality of interfaces. The operation method of the head-mounted display device may include, based on the detected pose corresponding to a second interface that is one of the plurality of interfaces, displaying the second interface through a display by replacing the first interface.

According to an embodiment of the present disclosure, there may be provided a computer-readable recording medium having recorded thereon a program for performing, on a computer, at least one of the operation methods according to the disclosed embodiments.

### Brief Description of Drawings

The present disclosure will be readily understood from the following description taken in conjunction with the accompanying drawings in which reference numerals denote structural elements.
FIG. 1 is a diagram illustrating a head-mounted display device according to an embodiment of the present disclosure.
FIG. 2 is a diagram illustrating a configuration of a head-mounted display device according to an embodiment of the present disclosure.
FIG. 3 is a block diagram of a configuration of a head-mounted display device according to an embodiment of the present disclosure.
FIG. 4 is a flowchart illustrating an operation method of a head-mounted display device, according to an embodiment of the present disclosure.
FIG. 5 is a flowchart illustrating an operation of displaying a first interface and a second interface while first content is displayed, according to an embodiment of the present disclosure.
FIG. 6 is a diagram illustrating an operation of displaying an interface corresponding to a detected pose of a user, according to an embodiment of the present disclosure.
FIG. 7 is a flowchart illustrating an operation of determining an interface location based on a spatial map generated through a camera and a detected pose, according to an embodiment of the present disclosure.
FIG. 8 is a flowchart illustrating an operation of obtaining a viewpoint of a user via an eye-tracking sensor and detecting a pose of the user based on the obtained viewpoint and an obtained image, according to an embodiment of the present disclosure.
FIG. 9 is a flowchart illustrating an operation of determining a content location for displaying second content, based on a viewpoint of a user obtained via an eye-tracking sensor, according to an embodiment of the present disclosure.
FIG. 10A is a diagram illustrating an operation of determining a content location for displaying second content, based on a viewpoint of a user obtained via an eye-tracking sensor, according to an embodiment of the present disclosure.
FIG. 10B is a diagram illustrating an operation of determining a content location for displaying second content, based on a viewpoint of a user obtained via an eye-tracking sensor, according to an embodiment of the present disclosure.
FIG. 11A is a diagram illustrating an operation of displaying first content and second content, according to an embodiment of the present disclosure.
FIG. 11B is a diagram illustrating an operation of displaying first content and second content, according to an embodiment of the present disclosure.
FIG. 11C is a diagram illustrating an operation of displaying first content and second content, according to an embodiment of the present disclosure.
FIG. 12 is a diagram illustrating whether to perform an operation of comparing a detected pose with a plurality of preset poses by comparing the detected pose with a preset start gesture, according to an embodiment of the present disclosure.

### Mode for the Invention

Terms used in the present disclosure will now be briefly described and an embodiment of the present disclosure will be described in detail.

The terms used in the present disclosure are selected from general terms currently widely used in the art by taking into account functions described in an embodiment of the present disclosure, but may vary according to an intention of a skilled person in the art, precedent cases, advent of new technologies, etc. Furthermore, specific terms may be arbitrarily selected by the applicant, and in this case, the meaning of the selected terms will be described in the relevant description of an embodiment of the present disclosure. Thus, the terms used herein should be defined not by simple appellations thereof but based on the meaning of the terms together with the overall description of the present disclosure.

Singular expressions used herein are intended to include plural expressions as well unless the context clearly indicates otherwise. All the terms used herein, which include technical or scientific terms, may have the same meaning that is generally understood by a person of ordinary skill in the art of the present disclosure.

Throughout the present disclosure, when a part "includes" or "comprises" an element, unless there is a particular description contrary thereto, it is understood that the part may further include other elements, not excluding the other elements. Furthermore, terms, such as "... unit," "module," etc., described herein refer to a unit for processing at least one function or operation, and may be implemented as hardware or software or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, in the present disclosure, when a component is referred to as being "connected" or "coupled" to another component, it should be understood that the component may be directly connected or coupled to the other component, but may also be connected or coupled to the other component via another intervening component therebetween unless there is a particular description contrary thereto.

An embodiment of the present disclosure will be described more fully hereinafter with reference to the accompanying drawings so that the embodiment may be easily implemented by one of ordinary skill in the art. However, an embodiment of the present disclosure may be implemented in different forms and should not be construed as being limited to embodiments set forth herein. In addition, parts not related to descriptions are omitted to clearly explain an embodiment of the present disclosure in the drawings, and like reference numerals denote like elements throughout.

Hereinafter, embodiments of the present disclosure are described in detail with reference to the accompanying drawings.

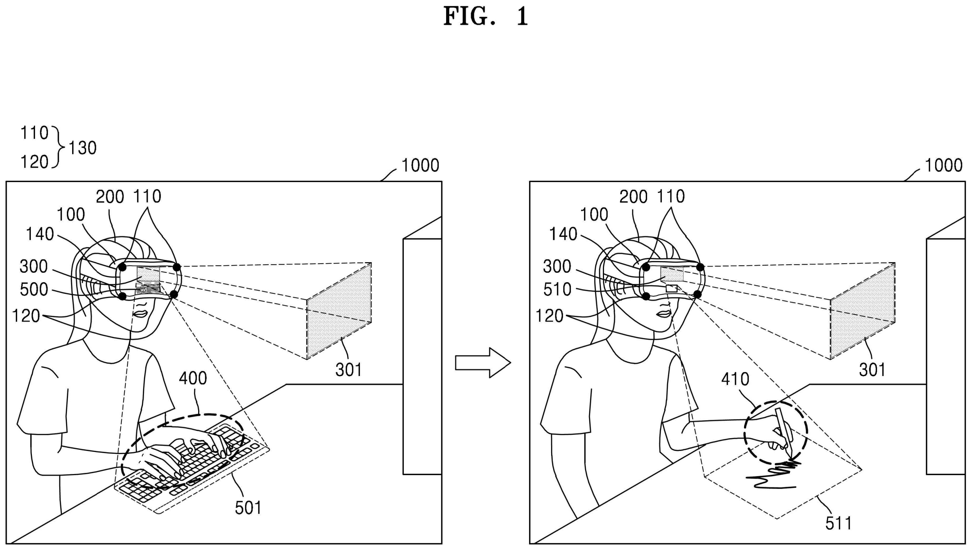

FIG. 1 is a diagram illustrating a head-mounted display (HMD) device according to an embodiment of the present disclosure.

Referring to FIG. 1, an electronic device according to an embodiment of the present disclosure may provide content 300 to a user 200 wearing the electronic device. In an embodiment, the electronic device is a device capable of providing the content 300 to the user 200, and may be an HMD device 100.

In an embodiment, FIG. 1 illustrates the electronic device having a shape that includes a support portion spanning a face of the user 200. However, the present disclosure is not limited thereto, and the electronic device may include a support portion spanning the face and head of the user 200. Hereinafter, for convenience of description, the electronic device is described as the HMD device 100.

In an embodiment, the HMD device 100 may be an optical see-through device that provides the user 200 with a virtual image overlaid on a physical environment space 1000 in the real world or a real-world object. The HMD device 100 may provide the user 200 with data provided from an external source or a virtual image generated by the HMD device 100.

However, the present disclosure is not limited thereto. The HMD device 100 may be a video see-through electronic device that obtains an image of the physical environment space 1000 at which a gaze of the user 200 is directed, which is captured using a camera, and then provides the obtained image to the user 200.

Hereinafter, for convenience of description, the HMD device 100 of the present disclosure is described as an optical see-through device, but the present disclosure is not limited thereto.

In an embodiment, the HMD device 100 may include a camera 130. In an embodiment, the camera 130 may include a first camera 110 for obtaining an image in front of the HMD device 100 and a second camera 120 for obtaining an image below the HMD device 100. In an embodiment, the image obtained in front may refer to an image of an environment located in front of the HMD device 100 from among images of the real world, i.e., the user's surrounding environment. The image obtained below may refer to an image of the environment located below the HMD device 100 from among the images of the real world.

In an embodiment, the first camera 110 may be located at an upper portion of the HMD device 100. The second camera 120 may be located at a lower portion of the HMD device 100. However, the present disclosure is not limited thereto. The positions of the first camera 110 and the second camera 120 disposed on the HMD device 100 are not limited thereto.

In an embodiment, FIG. 1 shows the HMD device 100 including two first cameras and two second cameras. However, the present disclosure is not limited thereto, and the number of the first cameras 110 and the number of the second cameras 120 may each be one or three or more.

However, the present disclosure is not limited thereto, and the HMD device 100 may include a camera capable of capturing images both in front of and below the HMD device 100. In this case, the number of cameras capable of capturing images both in front and below may be one or more.

Hereinafter, for convenience of description, the camera 130 is described as including the first camera 110 located at the upper portion of the HMD device 100 to capture an image in front of the HMD device 100 and the second camera 120 located at the lower portion of the HMD device 100 to capture an image below the HMD device 100.

In an embodiment, the HMD device 100 may provide the content 300 to the user 200 by displaying the content 300 through a display 140.

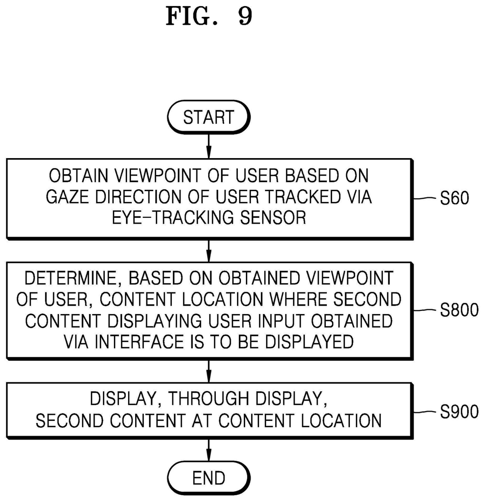

In an embodiment, the HMD device 100 may determine the position, size, and arrangement of the content 300 displayed on the display 140 so that the content 300 appears to the user 200 to be located in a specific region within the real-world space 1000 or overlaid on a specific object included in the real-world space 1000. Information about the position, size, and arrangement of the content 300 to be displayed on the display 140 may be referred to as a "content location". The HMD device 100 may display the content 300 at the determined content location on the display 140 based on a viewpoint of the user 200 and provide the content 300 to the user 200. A content location and a method of determining the content location are described below with reference to FIGS. 9 to 10B.

In an embodiment, while the content 300 is provided to the user 200 through the HMD device 100, the user may provide a user input to the HMD device 100 through an interface provided from the HMD device 100. The HMD device 100 may obtain the user input via the interface provided to the user 200.

The HMD device 100 of the present disclosure may obtain an image of a user 200 captured through the camera 130.

In an embodiment, the HMD device 100 may obtain an image by capturing a motion using hands of the user 200 through the camera 130. The HMD device 100 may obtain an image by capturing, through the second camera 120, a motion using the hands of the user 200, without movement of the head of the user wearing the HMD device 100. Here, the image refer to an image containing information about the user, which is obtained by being captured to include a body of the user in order to detect a pose of the user.

In an embodiment, even when the user 200 moves his or her hands while looking at the content 300 with or without moving his or her head while wearing the HMD device 100, the HMD device 100 may obtain an image of the hands of the user 200 captured through the second camera 120.

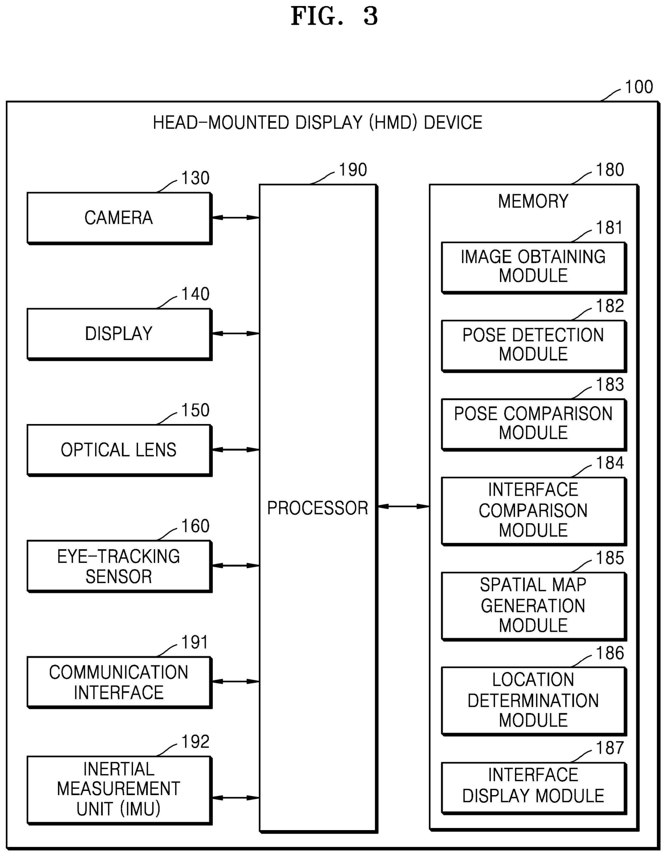

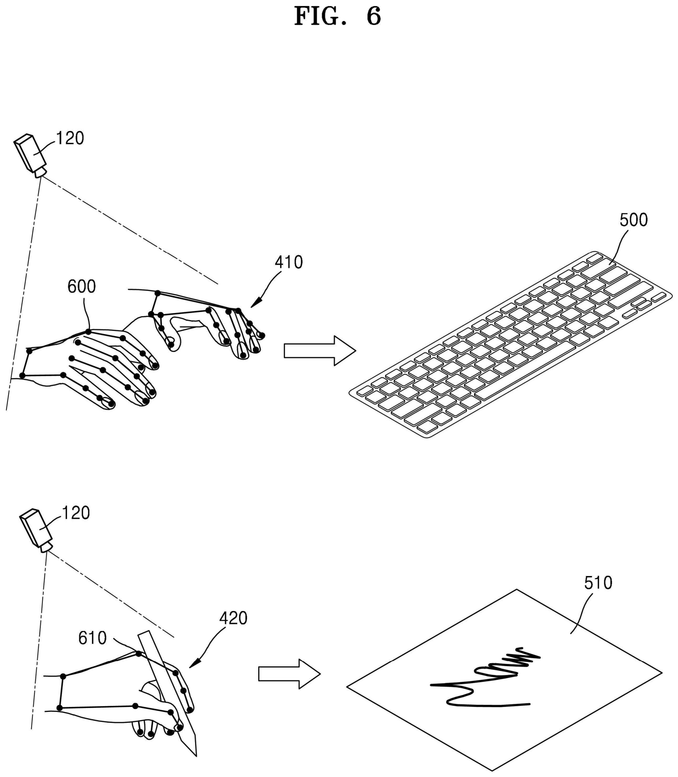

In an embodiment, the HMD device 100 may detect a pose of the user based on the obtained image. In an embodiment, the HMD device 100 may detect a pose 400 of the hands of the user based on the image including the hands of the user 200. An operation of detecting a pose of a user based on an image obtained by the HMD device 100 is described in detail below with reference to FIGS. 3 and 6.

In an embodiment, the HMD device 100 may compare the detected pose 400 of the user with a plurality of preset poses. The plurality of preset poses may include a pose of a hand typing on a keyboard, a pose of a hand using a mouse, a pose of a hand drawing on a drawing pad (e.g., an object such as paper or a pad for drawing) by using a pen, a pose of a hand using a touchpad (e.g., a pad for controlling a user input via touch), etc. However, the present disclosure is not limited thereto, and the plurality of preset poses may include a pose of a person performing a specific motion.

In an embodiment, the plurality of poses may be preset to respectively correspond to a plurality of interfaces. In an embodiment, an interface may include a keyboard, a mouse, a drawing pad, or a touchpad. The pose of the hands typing may be set to correspond to the keyboard. The pose of the hand using the mouse may be set to correspond to the mouse. The pose of the hand drawing using the pen may be set to correspond to the drawing pad.

In an embodiment, based on the detected pose 400 corresponding to one of the plurality of preset poses, the HMD device 100 may display, on the display 140, an interface set to correspond to the one preset pose. The HMD device 100 may provide the interface corresponding to the detected pose 400 to the user 200 via the display 140.

In an embodiment, the HMD device 100 may determine the position, size, and arrangement of the interface displayed on the display 140 so that the interface appears to the user 200 to be located in a specific region within the real-world space 1000 or overlaid on a specific object included in the real-world space 1000. Information about the position, size, and arrangement of an interface to be displayed on the display 140 may be referred to as an "interface location". The HMD device 100 may determine the interface corresponding to the detected pose 400, and determine an interface location based on at least one of a shape, a size, or a type of the determined interface and a spatial map. The HMD device 100 may display the interface at the determined interface location on the display 140 and provide the interface to the user 200.

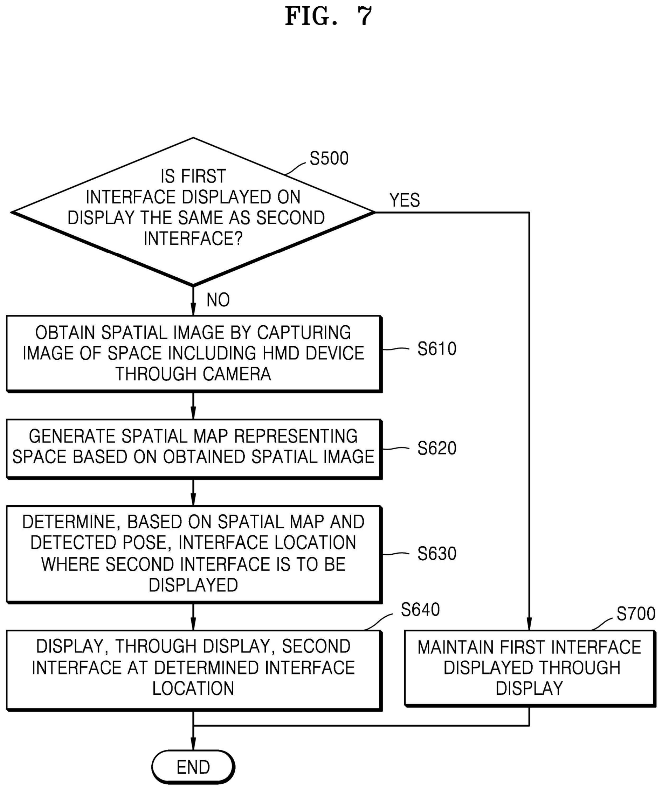

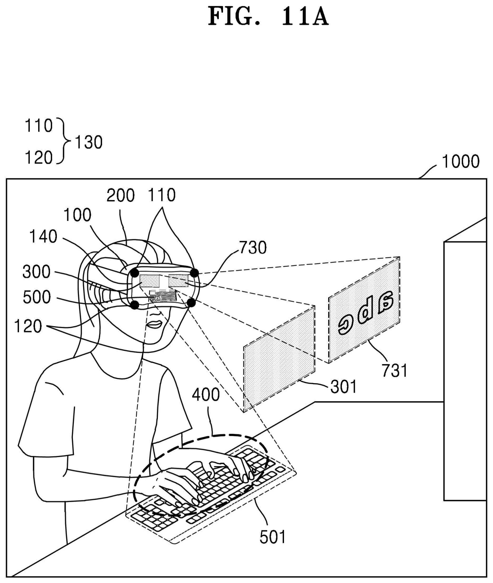

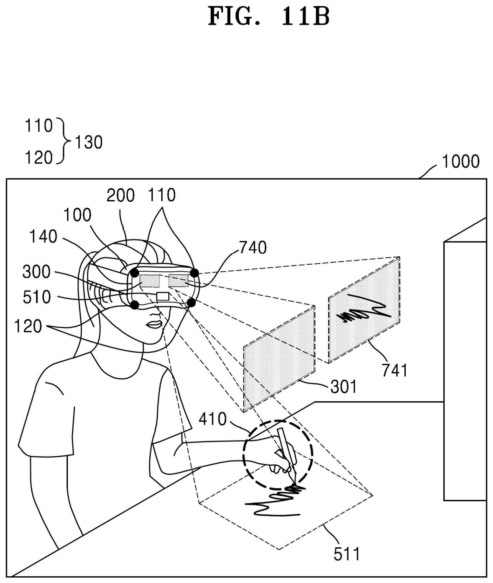

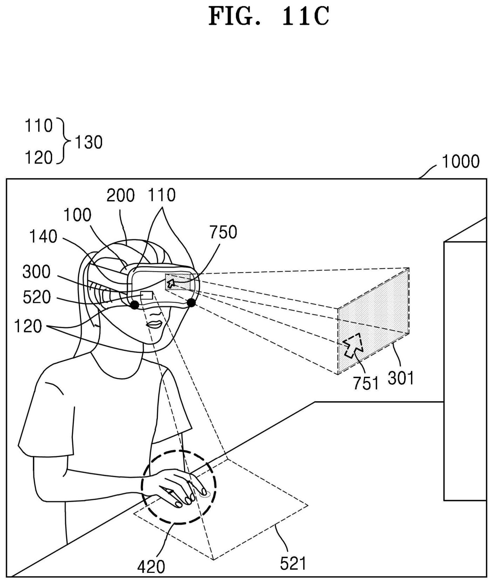

In an embodiment, the HMD device 100 may obtain a spatial image by capturing an image of the space 1000 including the HMD device 100 through the camera 130. Here, the spatial image may refer to an image containing spatial information, which is obtained by capturing an image of the space 1000 in order to generate a spatial map. The HMD device 100 may generate a spatial map representing the space 1000, based on the obtained spatial image. An operation of generating a spatial map based on a spatial image obtained by the HMD device 100 is described in detail below with reference to FIGS. 3 and 7. Additionally, an operation of determining an interface location is described below with reference to FIGS. 3, 11A, 11B, and 11C.

In an embodiment, when the detected pose 400 corresponds to the pose of the hand typing among the plurality of preset poses, the HMD device 100 may display, on the display 140, a keyboard 500 corresponding to the pose of the hand typing. In an embodiment, the HMD device 100 may determine, based on the spatial map and the pose of the hand typing, an interface location where the keyboard 500 is to be displayed on the display 140. The interface location where the keyboard 500 is to be displayed may be a location on the display 140 at which the keyboard 500 is displayed such that the user 200 feels as if the keyboard 500 is located in a region where fingers of the user 200 are positioned on a table included in the real-world space 1000.

In an embodiment, the user 200 may receive the content 300 and the keyboard 500 through the HMD device 100. The user 200 may experience the content 300 and the keyboard 500 displayed on the display 140 as being located within the real-world space 1000. In an embodiment, FIG. 1 illustrates virtual content 301 and a virtual keyboard 501 that, as experienced through the HMD device 100, cause the content 300 and the keyboard 500 displayed on the display 140 in a field of view of the user 200 to appear to be located in the real-world space 1000 or overlaid on a real-world object.

In an embodiment, a content location may be a location on the display 140 determined to make the content 300 displayed on the display 140 appear to the user 200 as the virtual content 301. In an embodiment, an interface location may be a location on the display 140 determined to make the keyboard 500 displayed on the display 140 appear to the user 200 as the virtual keyboard 501.

The user 200 may provide a user input to the HMD device 100 via the keyboard 500 displayed through the HMD device 100. The user 200 may provide a user input to the HMD device 100 via the keyboard 500 displayed on the display 140, which is perceived as the virtual keyboard 501.

Through the present disclosure, the user 200 may not perform motions to request the keyboard 500 through the HMD device 100, other than assuming the pose of the hand typing, (e.g., motions such as manipulating a physical button of the HMD device 100 to display an interface, pausing the running content 300 and performing manipulation to display an interface , or performing manipulation to display an interface while viewing a screen other than the content 300).

In an embodiment, the HMD device 100 may detect a pose of the user 200 even after detecting the pose of the hand of the user 200 typing and then displaying the keyboard 500 on the display 140. In an embodiment, the HMD device 100 may repeat the operation of detecting the pose of the user 200 at preset intervals.

In an embodiment, the HMD device 100 may perform operations of detecting the pose of the user 200 while the content 300 is displayed on the display 140, comparing the detected pose with the plurality of preset poses, and displaying a corresponding interface on the display 140.

In an embodiment, the HMD device 100 may compare an interface (e.g., the keyboard 500, hereinafter referred to as a 'first interface') that was displayed on the display 140 in a previous operation with an interface (hereinafter referred to as a 'second interface') corresponding to an additionally detected pose.

In an embodiment, based on a determination that the first interface is different from the second interface, the HMD device 100 may display the second interface on the display 140 and provide it to the user. In an embodiment, the second interface, which is different from the first interface displayed through the display 140, may be a notepad 510. Because the keyboard 500 displayed through the display 140 and notepad 510 are different interfaces, the HMD device 100 may display the notepad 510 through the display 140 by replacing the keyboard 500 with the notepad 510.

In an embodiment, the HMD device 100 may determine an interface location where the notepad 510 is to be displayed, based on the spatial map and the pose of the hand drawing using a pen. The HMD device 100 may display the notepad 510 at the determined interface location on the display 140. The interface location where the notepad 510 is to be displayed may be a location on the display 140 where the notepad 510 is displayed such that the user 200 feels as if the notepad 510 is located in a region where a tip of the pen is positioned on the table included in the real-world space 1000.

In an embodiment, the user 200 may experience the notepad 510 displayed on the display 140 as being located within the real-world space 1000. In an embodiment, FIG. 1 illustrates a virtual notepad 511 that, as experienced by the user 200 through the HMD device 100, causes the notepad 510 displayed on the display 140 in the field of view of the user 200 to appear to be located in the real-world space 1000 or overlaid on a real-world object.

In an embodiment, in this case, an interface location where the notepad 510 is to be displayed may be a location on the display 140 determined to make the notepad 510 displayed on the display 140 appear to the user 200 as the virtual notepad 511.

In an embodiment, based on a determination that the first interface is the same as the second interface, the HMD device 100 may maintain the first interface displayed through the display 140. In an embodiment, when the detected pose 410 corresponds to the pose of the hand typing among the plurality of preset poses, an interface corresponding to the pose may be the keyboard 500. In this case, the HMD device 100 may maintain the keyboard 500 displayed through the display 140 and provide the keyboard 500 to the user 200.

Through the present disclosure, the user 200 may assume a pose associated with the second interface of a different type to enter a user input through the second interface, while entering a user input through a first interface. The user 200 does not need to perform other motions to request the second interface (e.g., motions such as manipulating a physical button of the HMD device 100 to display an interface, pausing the running content 300 and performing manipulation to display an interface, or performing manipulation to display an interface while viewing a screen other than the content 300). This may provide a continuous usage experience to the user 200 and improve operational ease for the user 200. Furthermore, depending on the content 300, the user 200 may provide a user input by using a type of interface desired by the user 200.

The effects that can be obtained from the present disclosure are not limited to those described above, and other effects not mentioned herein will be clearly understood by those of ordinary skill in the art to which the present disclosure belongs.

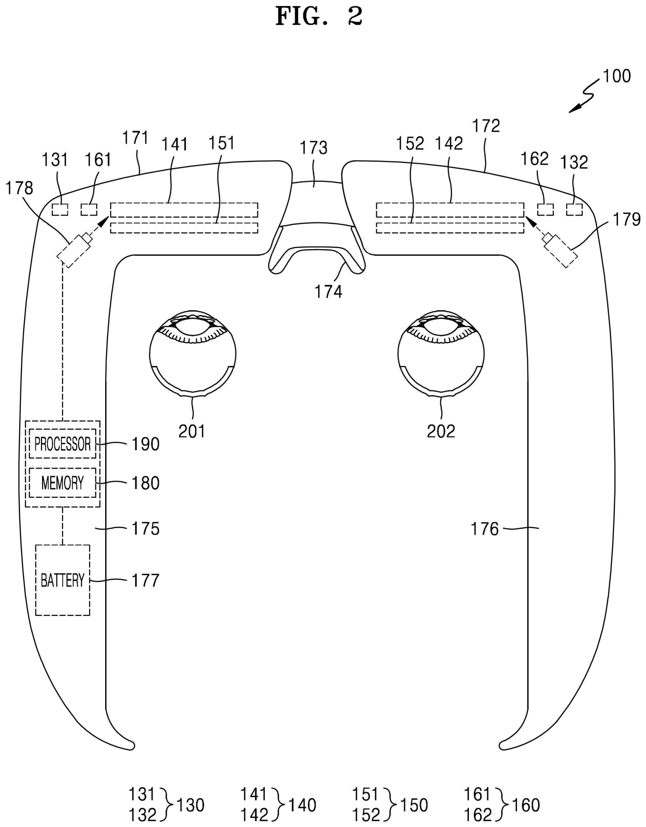

FIG. 2 is a diagram illustrating a configuration of an HMD device according to an embodiment of the present disclosure.

Referring to FIGS. 1 and 2, the HMD device 100 may include the camera 130, the display 140, an optical lens 150, an eye-tracking sensor 160, a frame 171 and 172, a nose bridge 173, a nose support 174, an eyeglass temple 175 and 176, a battery 177, a display engine 178 and 179, a memory 180, and at least one processor 190. In an embodiment, only components for describing the structure of the HMD device 100 are shown in FIG. 2, and the components included in the HMD device 100 are not limited to those shown in FIG. 2.

In an embodiment, the display 140 and the optical lens 150 may be respectively located on the frame 171 and 172. The frame 171 and 172 may include a shape similar to that of a frame of a general eyeglass structure. The frame 171 and 172 may include a rim surrounding the display 140 and the optical lens 150.

In an embodiment, the display 140 may include a first display 141 corresponding to the user's left eye 201 and a second display 142 corresponding to the user's right eye 202. In an embodiment, the optical lens 150 may include a first optical lens 151 corresponding to the user's left eye 201 and a second optical lens 152 corresponding to the user's right eye 202. In an embodiment, a distance between the optical lens 150 and the user's eyes may be less than a distance between the display 140 and the user's eyes.

In an embodiment, the first optical lens 151 may be located closer to the user's left eye 201 than the first display 141. In an embodiment, the second optical lens 152 may be located closer to the user's right eye 202 than the second display 142.

In an embodiment, the eye-tracking sensor 160 may include a first eye-tracking sensor 161 corresponding to the user's left eye 201 and a second eye-tracking sensor 162 corresponding to the user's right eye 202.

In an embodiment, the frame 171 and 172 may include a first frame 171 corresponding to the user's left eye 201 and a second frame 172 corresponding to the user's right eye 202. The first frame 171 may include a rim surrounding the first display 141 and the first optical lens 151. The second frame 172 may include a rim surrounding the second display 142 and the second optical lens 152.

In an embodiment, the camera 130 may include a left camera 131 corresponding to the first frame 171 and a right camera 132 corresponding to the second frame 142. In an embodiment, FIG. 2 illustrates one left camera 131 and one right camera 132, but the present disclosure is not limited thereto. Referring to FIGS. 1 and 2, the left camera 131 and the right camera 132 may each include the first camera 110 and the second camera 120.

In an embodiment, the left camera 131 may obtain images by capturing images of the surrounding environment of the first frame 171. The left camera 131 includes the first camera 110 and the second camera 120, and may obtain images in front of and below the first frame 171. The right camera 132 may obtain images by capturing images of the surrounding environment of the second frame 172. The right camera 132 includes the first camera 110 and the second camera 120, and may obtain images in front of and below the second frame 172.

In an embodiment, by being oriented in a direction opposite to a direction in which the display 140 faces the user, the camera 130 may obtain images by capturing images of the user's surrounding environment. However, the present disclosure is not limited thereto, and depending on the arrangement or performance of the left camera 131 and the right camera 132, images may also be obtained by capturing images of areas above, to the side, or to the rear of the first frame 171 and the second frame 172.

In an embodiment, the first display 141, the first optical lens 151, the first camera 131, and the first eye-tracking sensor 161 may be arranged on the first frame 171. In an embodiment, the second display 142, the second optical lens 152, the second camera 132, and the second eye-tracking sensor 162 may be arranged on the second frame 172.

However, the present disclosure is not limited thereto. The first display 141 and the second display 142 may be integrally formed and located on the frame 171 and 172. The first optical lens 151 and the second optical lens 152 may be integrally formed and located on the frame 171 and 172. Furthermore, the first display 141 and the first optical lens 151 may be integrally formed and located on the frame 171 and 172. The second display 142 and the second optical lens 152 may be integrally formed and located on the frame 171 and 172.

In an embodiment, the eyeglass temple 175 and 176 may be connected to the frame 171 and 172. The eyeglass temple 175 and 176 is a portion that supports the HMD device 100 by resting on ears of the user 200 when the user 200 wears the HMD device 100. In an embodiment, the eyeglass temple 175 and 176 may include a first eyeglass temple 175 connected to the first frame 171 and a second eyeglass temple 176 connected to the second frame 172.

In an embodiment, the display engine 178 and 179 may include a first display engine 178 that projects a virtual image onto the first display 141 and a second display engine 179 that projects a virtual image onto the second display 142. In an embodiment, the display engine 178 and 179 may perform functions similar to those of a projector. The display engine 178 and 179 may further include an illumination optical system, an optical path changer, an image panel, a beam splitter, and a projection optical system. In an embodiment, the first display engine 178 may be built into the first eyeglass temple 175. The second display engine 179 may be built into the second eyeglass temple 176. In an embodiment, the virtual image may include the content 300.

In an embodiment, the battery 177, the display engine 178 and 179, the memory 180, and the at least one processor 190 included in the HMD device 100 may be embedded in the eyeglass temple 175 and 176. Although FIG. 2 illustrates that the battery 177, the memory 180, and the at least one processor 190 are embedded in the first eyeglass temple 175, this is merely an exemplary structure, and the present disclosure is not limited to that illustrated.

In an embodiment, the nose support 174 may be connected to the frame 171 and 172. The nose support 174 is a portion that supports the HMD device 100 by resting on the nose of the user when the user wears the HMD device 200. In an embodiment, the nose support 174 may include a bridge and nose pads. Furthermore, the bridge and the nose pads may be integrally formed, but are not limited thereto. In an embodiment of the present disclosure, the nose support 174 may be integrated with the frame 171 and 172.

In an embodiment, the nose bridge 173 is a support that connects the first frame 171 to the second frame 172. The nose bridge 173 may be connected to the nose support 174. However, when the first frame 171 and the second frame 172 are integrally formed, the HMD device 100 may not include the nose bridge 173.

In an embodiment, the eye-tracking sensor 160 may track a gaze direction of the user by emitting light onto the eyes 201 and 202 of the user wearing the HMD device 100 and receiving reflected light that is light reflected from the eyes 201 and 202 of the user. The configuration, operation, and functions of the eye-tracking sensor 160 are described in detail below with reference to FIG. 3.

In an embodiment, the battery 177 may be electrically connected to the camera 130, the eye-tracking sensor 160, the memory 180, and the at least one processor 190. The battery 177 may supply driving power to the camera 130 and the eye-tracking sensor 160.

In an embodiment, the battery 177 may include at least one battery module composed of rechargeable secondary batteries. The battery 177 may include, for example, a lithium (Li)-ion battery, a Li-ion polymer battery (LIPB), a nickel (Ni)-cadmium (Cd) battery, a Ni-metal hydride (MH) battery, or the like, but is not limited thereto.

Specific configurations, operations, and functions of the memory 180 and the at least one processor 190 are described in detail below with reference to FIG. 3.

FIG. 3 is a block diagram of a configuration of an HMD device according to an embodiment of the present disclosure.

Referring to FIGS. 1 to 3, the HMD device 100 may include the camera 130, the display 140, an optical lens 150, the eye-tracking sensor 160, the memory 180, the at least one processor 190, a communication interface 191, and an inertial measurement unit (IMU) 192. However, all of the components illustrated in FIG. 3 are not essential components. The HMD device 100 may be implemented with more components than those illustrated in FIG. 3, or may be implemented with fewer components than those. In an embodiment, FIG. 3 does not show the components such as the frame 171 and 172, the nose bridge 173, the nose support 174, the eyeglass temple 175 and 176, the battery 177, and the display engine 178 and 179 in comparison to FIG. 2.

In an embodiment, the camera 130, the display 140, an optical lens 150, the eye-tracking sensor 160, the memory 180, the at least one processor 190, the communication interface 191, and the IMU 192 may be electrically connected to one another. Hereinafter, components identical to those described with reference to FIGS. 1 and 2 will be assigned the same reference numerals, and repeated descriptions are omitted.

In an embodiment, the camera 130 may obtain images by capturing the physical environment space 1000 in the real world or a physical object in the real world. In an embodiment, the camera 130 may include an RGB camera capable of obtaining images containing RGB information by capturing images of the real world.

In an embodiment, the camera 130 may include a plurality of RGB cameras. The at least one processor 190 may also obtain depth information by using images containing RGB information respectively captured by the plurality of RGB cameras. The plurality of RGB cameras may respectively capture images of the real world from different locations.

In an embodiment, the at least one processor 190 may also obtain depth information of the real world, based on a positional relationship among the plurality of RGB cameras, a distance between a plurality of pixels that capture the same point included in images respectively obtained from the plurality of RGB cameras, and a size of each of the plurality of pixels. In an embodiment, the camera 130 may include a stereo camera including two RGB cameras.

Additionally, the camera 130 may include an RGB-Depth camera that obtains images containing RGB information and depth information by capturing images of the real world.

In an embodiment, the display 140 may include an optical element formed of a transparent material. The display 140 may be composed of a transparent material so that a portion of a rear surface thereof is visible when the user 200 wears the HMD device 100. In an embodiment, the display 140 may include a waveguide. A waveguide may be composed of a single-layer or multi-layer flat plate made of a transparent material that allows light to propagate by being reflected internally. However, the present disclosure is not limited thereto, and the display 140 may include other types of displays capable of providing a virtual image (e.g., the content 300) to the user.

In an embodiment, when the HMD device 100 is a video see-through device, the display 140 may include any one of a liquid crystal display (LCD), an organic light-emitting diode (OLED) display, or an inorganic light-emitting diode (iLED) display.

In an embodiment, the display 140 is positioned opposite a projection surface of the display engine 178 and 179, and may receive light of a virtual image projected from the display engine 178 and 179. The light of the virtual image projected onto the display 140 may propagate within the display 140 based on the principle of total reflection. The display 140 may change the path of the light and ultimately provide the virtual image to the user.

In an embodiment, the optical lens 150 may include a material that allows light provided from the real world toward the HMD device 100 to pass through. In an embodiment, the optical lens 150 may include a material that allows light forming an image provided through the display to pass through.

In an embodiment, the eye-tracking sensor 160 may obtain a gaze direction of the user 200. In an embodiment, the eye-tracking sensor 160 may track the gaze direction of the user by detecting an image of an eyeball or pupil of the user, or by detecting a direction or intensity of reflected light that is light such as near-infrared light reflected from the cornea. In an embodiment, the eye-tracking sensor 160 may include the first eye-tracking sensor 161 and the second eye-tracking sensor 162. The first eye-tracking sensor 161 may track and obtain a gaze direction of the user's left eye. The second eye-tracking sensor 162 may track and obtain a gaze direction of the user's right eye.

In an embodiment, the eye-tracking sensor 160 may include a light source that emits light toward the user's eyes 201 and 202 and a sensor that receives reflected light that is light reflected from the user's eyes 201 and 202. In this case, the light emitted toward the user's eyes 201 and 202 and the reflected light from the user's eyes may each be infrared rays (IR).

In an embodiment, the memory 180 may store instructions, data structures, and program code that are readable by the at least one processor 190. In an embodiment, the memory 180 may be one or more. In the disclosed embodiments, operations performed by the at least one processor 190 may be implemented by executing instructions or code of a program stored in the memory 180.

In an embodiment, the memory 180 may include at least one type of storage medium from among a flash memory-type memory, a hard disk-type memory, a multimedia card micro-type memory, a card-type memory (e.g., a Secure Digital (SD) card or an eXtreme Digital (xD) memory), random access memory (RAM), static RAM (SRAM), read-only memory (ROM), electrically erasable programmable ROM (EEPROM), PROM, mask ROM, flash ROM, hard disk drive (HDD), or solid-state drive (SSD).

In an embodiment, the memory 180 may store at least one instruction or program code for performing functions or operations of the HMD device 100. Instructions, algorithms, data structures, program code, and application programs stored in the memory 140 may be implemented in programming or scripting languages such as C, C++, Java, assembler, etc.

In an embodiment, the memory 180 may store an image obtaining module 181, a pose detection module 182, a pose comparison module 183, an interface comparison module 184, a spatial map generation module 185, a location determination module 186, and an interface display module 187. However, all of the modules shown in FIG. 3 are not essential modules. The memory 180 may store more or fewer modules than those illustrated in FIG. 3. Additionally, the memory 180 may store a plurality of poses that are preset to correspond to at least one interface.

A 'module' included in the memory 180 may refer to a unit for processing a function or operation performed by the at least one processor 190. The 'module' included in the memory 192 may be implemented as software such as instructions, algorithms, data structures, or program code.

In an embodiment, the image obtaining module 181 may be composed of instructions or program code related to an operation or function for obtaining images of the real world through the camera 130. The image obtaining module 181 may include instructions or program code related to the operation or function for obtaining an image by capturing an area in front of the HMD device 100 through the first camera 110. The image obtaining module 181 may include instructions or program code related to the operation or function for obtaining an image by capturing an area below the HMD device 100 through the second camera 120.

In an embodiment, the at least one processor 190 may execute the instructions or program code of the image obtaining module 181 to obtain images of the real world, which are captured through the camera 130. The at least one processor 190 may execute the instructions or program code of the image obtaining module 181 to obtain an image of the user 200 captured through the camera 130. In detail, the at least one processor 190 may execute the instructions or program code of the image obtaining module 181 to obtain an image including the user's hand by capturing an image of a motion of the user 200 through the camera 130.

In an embodiment, the pose detection module 182 may be composed of instructions or program code related to an operation or function for detecting a pose of the user based on the obtained image. In an embodiment, the pose detection module 182 may be composed of instructions or program code related to an operation or function for detecting a pose of the user's hand based on the user's hand included in the obtained image.

In an embodiment, the pose detection module 182 may include instructions or program code related to an operation or function for detecting feature points of the user 200 included in the obtained image and obtaining position information of the feature points. The pose detection module 182 may include instructions or program code related to an operation or function for detecting a person's pose based on the detected feature points.

In this case, a 'feature point' may indicate a point within an image that is distinguishable from the surrounding background or is easily identifiable. Feature points may include joints (skeleton), hands, face, etc. A 'pose' may refer to a shape consisting of at least one feature point. In an embodiment, a pose may refer to a shape corresponding to a plurality of feature points and a form created by connecting the plurality of feature points with lines.

In an embodiment, the pose detection module 182 may include instructions or program code related to an operation or function for detecting a plurality of feature points and detecting a pose of a person by connecting the detected plurality of feature points. In an embodiment, the pose detection module 182 may include a pose estimation model for estimating a pose of a person. In an embodiment, the pose detection module 182 may include models such as OpenPose, AlphaPose, and Cascaded Pyramid Network (CPN). The pose detection module 182 may also detect a person's pose from an image by using deep learning-based models such as Convolutional Neural Network (CNN), Transformer, and Vision Transformer.

In an embodiment, the at least one processor 190 may execute the instructions or program code of the pose detection module 182 to detect feature points of the user 200 included in the obtained image. The at least one processor 190 may execute the instructions or program code of the pose detection module 182 to detect a plurality of feature points from the obtained image, and detect a pose of the user 200 by connecting the detected plurality of feature points.

In an embodiment, the pose comparison module 183 may be composed of instructions or program code related to an operation or function for comparing the detected pose with a plurality of poses that are preset to correspond to at least one interface. The pose comparison module 183 may be composed of instructions or program code related to an operation or function for determining whether the detected pose corresponds to any of the plurality of preset poses by comparing the detected pose with the plurality of preset poses.

In an embodiment, 'a plurality of preset poses' may refer to poses having preset specific shapes. In an embodiment, the plurality of preset poses may include a pose set as a shape of a hand typing on a keyboard. The plurality of preset poses may include a pose set as a shape of a hand using a mouse. The plurality of preset poses may include a pose set as a shape of a hand drawing using a pen. However, the present disclosure is not limited thereto, and the plurality of preset poses may include poses preset in various shapes.

In an embodiment, the 'plurality of preset poses' may be respectively set to correspond to a plurality of interfaces. In an embodiment, each of the plurality of preset poses may be a pose set as a specific shape when using a specific interface. Each of the plurality of preset pose may be set as a specific interface and a pose having the shape of a hand when using the corresponding interface. In an embodiment, a pose set as a shape of a hand typing may be set to correspond to a keyboard. A pose set as a shape of a hand using a mouse may be set to correspond to the mouse. A pose set as a shape of a hand drawing using a pen may be set to correspond to a drawing pad, which is the object for drawing.

However, the present disclosure is not limited to this, and the plurality of preset poses may be set to correspond to interfaces that are used by assuming preset poses in various shapes.

In an embodiment, each of the plurality of preset poses may include a plurality of feature points. The plurality of feature points included in each of the plurality of preset poses may include position information corresponding to a specific shape. The pose comparison module 183 may be composed of instructions or program code for performing an operation or function for determining whether the detected pose corresponds to any of the plurality of preset poses by comparing position information of a plurality of feature points included in each of the plurality of preset poses with position information of a plurality of feature points included in the detected pose.

In an embodiment, the pose comparison module 183 may be composed of instructions or program code related to an operation or function for determining that the detected pose corresponds to one of the preset poses when a difference between the position information of the plurality of feature points included in the detected pose and the position information of the plurality of feature points included in the one pose is within an error range. In this case, the larger the error range is set, the faster the pose comparison operation can be performed. The smaller the error range is set, the higher the accuracy of the pose comparison operation will be. In an embodiment, the error range may be preset by considering the speed and accuracy of the pose comparison operation.

In an embodiment, the at least one processor 190 may execute the instructions or program code of the pose comparison module 183 to compare the detected pose with the plurality of preset poses. The at least one processor 190 may execute the commands or program code of the pose comparison module 183 to determine one of the plurality of preset poses corresponding to the detected pose.

In an embodiment, the interface comparison module 184 may be composed of instructions or program code related to an operation or function for comparing an interface (hereinafter, a second interface) that corresponds to one of the plurality of preset poses determined to correspond to the detected pose with an interface (hereinafter, a first interface) displayed through the display 140.

In an embodiment, the interface comparison module 184 may be composed of instructions or program code related to an operation or function for determining whether the first interface is the same as the second interface. In an embodiment, the at least one processor 190 may execute the instructions or program code related to the operation or function of the interface comparison module 184 to compare the first interface with the second interface.

In an embodiment, the at least one processor 190 may execute the instructions or program code of the interface comparison module 184 to determining whether the first interface is the same as the second interface by comparing the first interface displayed through the display 140 with the second interface corresponding to a pose determined to correspond to the detected pose.

In an embodiment, the image obtaining module 181 may be composed of instructions or program code related to an operation or function for obtaining a spatial image by capturing an image of the space 1000 including the HMD device 100 through the camera 130. The space 1000 including the HMD device 100 may represent the real world. In an embodiment, the spatial image may include an image obtained by capturing an area in front of the HMD device 100 through the first camera 110. The spatial image may include an image obtained by capturing an area below the HMD device 100 through the second camera 120.

In an embodiment, the HMD device 100 may include a Light Detection and Ranging (LiDAR) sensor, a Radio Detection and Ranging (RADAR) sensor, or the like. The image generation module 181 may be composed of instructions or program code related to an operation or function for obtaining a spatial image by capturing an image of the space 1000 including the HMD device 100 through the LiDAR sensor or RADAR sensor.

In an embodiment, the at least one processor 190 may execute the instructions or program code of the image obtaining module 181 to obtain a spatial image through the camera 130. In an embodiment, the at least one processor 190 may execute the instructions or program code of the image obtaining module 181 to obtain a spatial image through the LiDAR sensor or RADAR sensor.

In an embodiment, the spatial map generation module 185 may be composed of instructions or program code related to an operation or function for generating, based on the obtained spatial image, a spatial map representing the space 1000 including the HMD device 100. In an embodiment, a 'spatial map' is a map containing information about the space 1000 including the HMD device 100, and may be a map generated based on a background included in the spatial image, a type, position, and shape of an object therein, depth information of the background and the object, etc.

In an embodiment, the spatial map generation module 185 may include a Simultaneous Localization and Mapping (SLAM) algorithm. The spatial map generation module 185 may be composed of instructions or program code related to an operation or function for generating a spatial map by applying the spatial image to the SLAM algorithm. The at least one processor 190 may execute the instructions or program code of the spatial map generation module 185 to generate a spatial map by applying the spatial image to the SLAM algorithm.

However, the present disclosure is not limited thereto, and the spatial map generation module 185 may include other types of models or algorithms for generating a spatial map representing the space 1000 including the HMD device 100.

In an embodiment, the location determination module 186 may be composed of instructions or program code related to an operation or function for determining an interface location where an interface is to be displayed based on the generated spatial map and the detected pose. In this case, the 'interface location' may refer to the position, size, and arrangement of the interface to be displayed on the display 140 so that the interface appears to the user to be located in a specific region within the real-world space 1000 or to be overlaid on a specific object included in the real-world space 1000. In this case, the interface appearing to be overlaid on the specific object within the real-world space 1000 may indicate that the interface displayed on the display 140 appears to the user to be superimposed on the specific object within the real-world object 1000.

In an embodiment, the location determination module 186 may be composed of instructions or program code related to an operation or function for determining an interface location based on at least one of a position of an object in the real world, a shape of the object, a type of an interface corresponding to the detected pose, a shape of the interface corresponding to the detected pose, or position information of the detected pose in the real world, which are obtained based on the generated spatial map and the detected pose.

In an embodiment, the location determination module 186 may be composed of instructions or program code related to an operation or function for determining an interface location based on the spatial map, the detected pose, and a three degrees of freedom (3-DOF) measurement value including 3-axis angular velocity values (roll, yaw, and pitch) or a 6-DOF measurement value including three-dimensional (3D) position coordinate values (X-axis, Y-axis, and Z-axis coordinate values) of the user 200 and the 3-axis angular velocity values (roll, yaw, and pitch), obtained by the IMU 192. In an embodiment, the location determination module 186 may determine an interface location in response to a movement of the user 200 wearing the HMD device 100, such that the position of an interface changes and is displayed in response to a change in a 3-DoF measurement value, or in response to a change in a 6-DoF measurement value. Accordingly, the HMD device 100 may provide an interface supporting 3-DoF or an interface supporting 6-DoF. Hereinafter, the details about 3-DoF and 6-DoF are described below in relation to the IMU 192.

In an embodiment, the location determination module 186 may be composed of instructions or program code related to an operation or function for determining a content location where content is to be displayed based on a viewpoint of the user. In this case, the 'content location' may refer to the position, size, and arrangement of the content 300 displayed on the display 140 so that the content appears to the user 200 to be located in a specific region within the real-world space 1000 or to be overlaid on a specific object included in the real-world space 1000. In this case, the content appearing to be overlaid on the specific object within the real-world space 1000 may indicate that the content displayed on the display 140 appears to the user to be superimposed on or located in front of the specific object within the real-world object 1000.

In an embodiment, the interface display module 187 may be composed of instructions or program code related to an operation or function for displaying an interface through the display 140. In an embodiment, the interface display module 187 may be composed of instructions or program code related to an operation or function for displaying an interface at the determined interface location through the display 140.

In an embodiment, the at least one processor 190 may execute the instructions or program code of the interface display module 187 to display an interface through the display 140. The at least one processor 190 may execute the instructions or program code of the interface display module 187 to display an interface at the determined interface location through the display 140.

In an embodiment, the memory 180 may further store a content display module composed of instructions or program code related to an operation or function for displaying content through the display 140. In an embodiment, the at least one processor 190 may execute the instructions or program code of the content display module to display content through the display 140.

In an embodiment, the at least one processor 190 may include, but is not limited to, at least one of a CPU, a microprocessor, a graphics processing unit (GPU), an AP, application specific integrated circuits (ASICs), an AP, digital signal processors (DSPs), digital signal processing devices (DSPDs), programmable logic devices (PLDs), field programmable gate arrays (FPGAs), a neural processing unit (NPU), or a dedicated artificial intelligence (AI) processor designed with a hardware structure specialized for training and processing Al models.

In an embodiment of the present disclosure, when one or a plurality of processors included in the at least one processor 190 are a dedicated Al processor, the dedicated Al processor may be designed with a hardware structure specialized for processing a particular Al model.

In an embodiment of the present disclosure, the at least one processor 190 may be configured as circuitry such as a system-on-chip (SoC) or an integrated circuit (IC).

In an embodiment of the present disclosure, the at least one processor 190 may execute various types of modules stored in the memory 180. The at least one processor 190 may execute at least one instruction of each of various types of modules stored in the memory 180. By executing a program or at least one instruction stored in the memory 180, the at least one processor 190 may process data according to predefined operation rules or an Al model.

In an embodiment of the present disclosure, the at least one processor 190 may execute at least one of the image obtaining module 181, the pose detection module 182, the pose comparison module 183, the interface comparison module 184, the spatial map generation module 185, the location determination module 186, or the interface display module 187, which is stored in the memory 180.

In an embodiment of the present disclosure, the at least one processor 190 may include a plurality of processors. In an embodiment of the present disclosure, at least one of the image obtaining module 181, the pose detection module 182, the pose comparison module 183, the interface comparison module 184, the spatial map generation module 185, the location determination module 186, or the interface display module 187 may be executed by any one of the plurality of processors.

In an embodiment, the at least one processor 190 may execute at least one instruction stored in the memory 180 to control the operation of the HMD device 100 for displaying an interface.

In an embodiment, the communication interface 191 may perform data communication with an external server according to control by the at least one processor 190. Furthermore, the communication interface 191 may perform data communication with other nearby electronic devices as well as the external server.

In an embodiment, the communication interface 191 may perform data communication with a server or other nearby electronic devices by using at least one of data communication methods including, for example, wired local area network (LAN), wireless LAN, Wi-Fi, Bluetooth, ZigBee, Wi-Fi Direct (WFD), Infrared Data Association (IrDA), Bluetooth Low Energy (BLE), near field communication (NFC), wireless broadband Internet (WiBro), World Interoperability for Microwave Access (WiMAX), Shared Wireless Access Protocol (SWAP), Wireless Gigabit Alliance (WiGig), and radio frequency (RF) communication.

In an embodiment, the at least one processor 190 may receive a spatial map of the real world from an external server or nearby electronic devices via the communication interface 191.

In an embodiment, the IMU 192 may include at least one of an accelerometer, a gyroscope, or a magnetometer. The IMU 192 may be a sensor configured to measure at least one of a movement speed, orientation, angle, or gravitational acceleration of the HMD device 100 through at least one of an accelerometer, a gyroscope, or a magnetometer.

In an embodiment, when the user 200 wearing the HMD device 100 moves, the at least one processor 190 may measure at least one of the movement speed, orientation, angle, or gravitational acceleration of the HMD device 100 via the IMU 192. In an embodiment, the HMD device 100 may obtain 3-DoF measurement values by using the IMU 192. Additionally, the HMD device 100 may obtain 6-DoF measurement values by using the IMU 192.

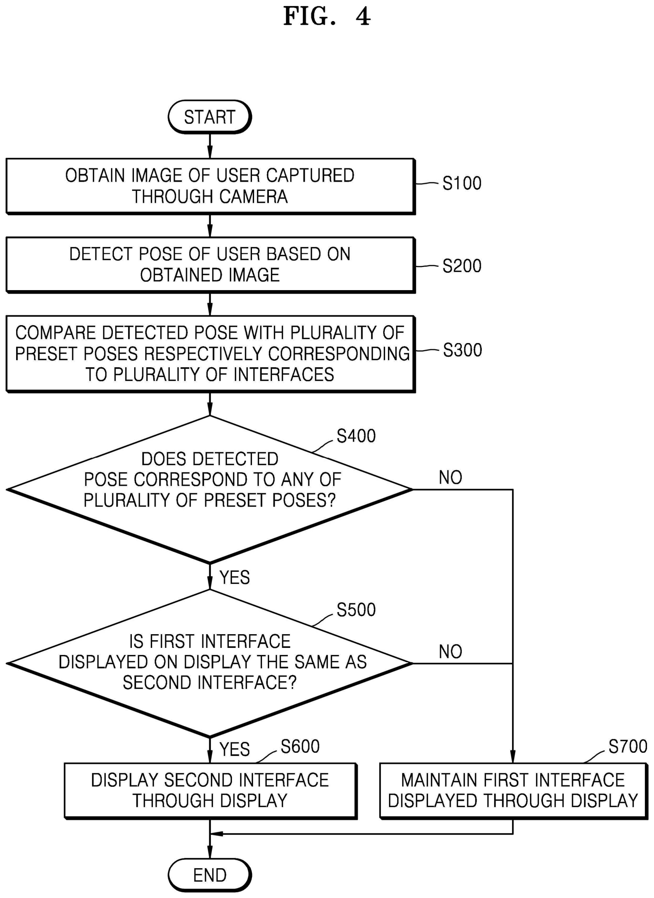

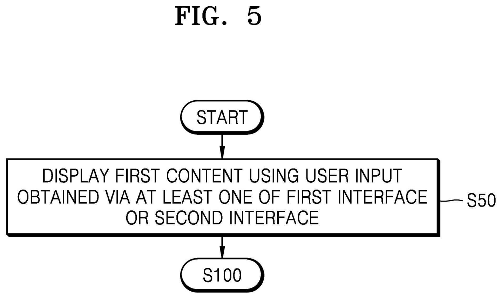

FIG. 4 is a flowchart illustrating an operation method of an HMD device, according to an embodiment of the present disclosure. FIG. 5 is a flowchart illustrating an operation of displaying a first interface and a second interface while first content is displayed, according to an embodiment of the present disclosure.

Referring to FIG. 1, 3, and 4, in an embodiment, FIG. 4 illustrates an operation method of the HMD device 100 while an interface is displayed through the display 140. In an embodiment, for description, an interface 500 displayed through the display 140 is referred to as a 'first interface 500,' and an interface 510 displayed through the display 140 according to a detected pose described below is referred to as a 'second interface 510'.

In an embodiment, the first interface 500 may be displayed on the display 140 as an interface corresponding to one of a plurality of preset poses, by detecting a motion of the user 200 from an image of the user 200, which is captured and obtained according to the present disclosure, and then comparing the detected motion with the plurality of preset poses. However, the present disclosure is not limited thereto, and the first interface 500 may also be displayed on the display 140 by using other methods, such as a user input provided through a user interface or the like.

In an embodiment, the operation method of the HMD device 100 may include an operation of obtaining an image of the user captured through the camera 130 (S100).

In an embodiment, in operation S100 of obtaining the image of the user that is captured, the at least one processor 190 may execute instructions or program code of the image obtaining module 181 to obtain the image of the user captured through the camera 130.

In an embodiment, the operation method of the HMD device 100 may include an operation of detecting a pose of the user based on the obtained image (S200).

In an embodiment, in operation S200 of detecting the pose of the user, the at least one processor 190 may execute instructions or program code of the pose detection module 182 to detect the pose of the user from the obtained image.

In an embodiment, in operation S200 of detecting the pose of the user, the at least one processor 190 may execute the instructions or program code of the pose detection module 182 to detect, estimate, or segment the user included in the obtained image. The at least one processor 190 may execute the instructions or program code of the pose detection module 182 to detect a plurality of feature points of the detected, estimated, or segmented user.

In an embodiment, in operation S200 of detecting the pose of the user, the at least one processor 190 may execute the instructions or program code of the pose detection module 182 to detect the pose of the user based on the detected plurality of feature points. In an embodiment, when the obtained image includes the user's hands, the at least one processor 190 may detect a pose of the user's hands based on a plurality of feature points detected from the user's hands.

In an embodiment, the operation method of the HMD device 100 may include an operation of comparing the detected pose 410 with a plurality of preset poses corresponding to at least one interface (S300).

In an embodiment, in operation S300 of comparing the detected pose 410 with the plurality of preset poses, the at least one processor 190 may execute instructions or program code of the pose comparison module 183 to compare the detected pose 410 with the plurality of preset poses respectively corresponding to a plurality of interfaces.

In an embodiment, the operation method of the HMD device 100 may include an operation of determining whether the detected pose 410 corresponds to any of the plurality of preset poses (S400).

In an embodiment, in operation S400 of determining whether the detected pose 410 corresponds to any of the plurality of preset poses, the at least one processor 190 may execute the instructions or program code of the pose comparison module 183 to determine whether a pose corresponding to the detected pose 410 exists among the plurality of preset poses by comparing the detected pose 410 with the plurality of poses.

Although FIG. 4 illustrates that operation S300 of comparing the detected pose 410 with the plurality of preset poses corresponding to the at least one interface and operation S400 of determining whether the detected pose 410 corresponds to any of the preset poses are separately illustrated, the present disclosure is not limited thereto. The operation of comparing the plurality of preset poses with the detected pose 410 and the operation of determining whether the detected pose 410 corresponds to any of the plurality of preset poses may be performed in a single operation.

In an embodiment, based on a determination in operation S400 that the detected pose 410 corresponds to one of the plurality of preset poses, the operation method of the HMD device 100 may include an operation of comparing the first interface 500 displayed on the display 140 with the second interface 510 corresponding to the one pose (S500).

In an embodiment, in operation S500, the at least one processor 190 may execute instructions or program code of the interface comparison module 184 to compare the first interface 500 with the second interface 510.

In an embodiment, based on a determination in operation S500 that the first interface 500 and the second interface 510 are different interfaces, the operation method of the HMD device 100 may include an operation of displaying the second interface 510 through the display 140 (S600).

In an embodiment, in operation S600 of displaying the second interface 510 through the display 140, the at least one processor 190 may execute instructions or program code of the interface display module 187 to display the second interface 510 through the display 140.

In an embodiment, in operation S600 of displaying the second interface 510 through the display 140, the at least one processor 190 may replace the first interface 500 displayed on the display 140 with the second interface 510. In an embodiment, in operation (S600) of displaying the second interface 510 through the display 140, the at least one processor 190 may execute the instructions or program code of the interface display module 187 to display the second interface 510 corresponding to the detected pose 410 by replacing the first interface 500 displayed on the display 140 with the second interface 510 and provide the second interface 510 to the user 200.

In an embodiment, based on a determination in operation S400 that the detected pose 410 does not correspond to any of the plurality of preset poses because the detected pose 410 is different from the plurality of poses, the operation method of the HMD device 100 may include an operation of maintaining the first interface 500 displayed through the display 140 (S700).

In an embodiment, based on a determination in operation S400 that the detected pose 410 differs from the plurality of preset poses, the at least one processor 190 may execute the instructions or program code of the interface display module 187 to maintain the first interface 500 displayed through the display 140 and provide it to the user 200.

In an embodiment, when the detected pose does not correspond to any of the plurality of preset poses, the HMD device 100 may determine that the motion of the user 200 is not a motion intended to change the interface displayed on the display 140. Therefore, the HMD device 100 may continuously maintain the first interface 500 displayed through the display 140. This may prevent the interface displayed through the display 140 from being unnecessarily changed due to the motion of the user 200.

In an embodiment, based on a determination in operation S500 that the first interface 500 is the same as the second interface 510, the at least one processor 190 may execute the instructions or program code of the interface display module 187 to maintain the first interface 500 displayed through the display 140 and provide the first interface 200 to the user 200.

In an embodiment, when it is determined that the second interface corresponding to the detected pose is the same as the first interface 500 displayed through the display 140, the HMD device 100 may determine that the motion of the user 200 is a motion for using the first interface 500. Therefore, the HMD device 100 may continuously maintain the first interface 500 displayed through the display 140. This may prevent the interface displayed through the display 140 from being changed while the user 200 is using the first interface 500.

Referring to FIG. 1, 3, 4, and 5, in an embodiment, the operation method of the HMD device 100 may include an operation of displaying the content 300 on the display 140 (S50).

In an embodiment, for description, the content 300 displayed in operation (S50) of displaying the content 300 on the display 140 is referred to as 'first content'.

In an embodiment, the first content is content displayed through the display 140 and provided to the user 200, and may include an image or a video and is not limited to any of online lectures, Internet browsers, games, chat screens, maps, books, advertisements, movies, video chats, etc.

In an embodiment, operation S100 of obtaining the image of the user captured through the camera 130 may be performed after operation S50 of displaying the content 300 on the display 140. In an embodiment, the operation method described with reference to FIG. 4 may be performed after operation S50 of displaying the content 300 on the display 140. In an embodiment, the operation of displaying the first interface 500 and the second interface 510 through the display 140 may be performed while the first content 300 is displayed on the display 140.

In an embodiment, while the first content 300 is displayed on the display 140, the user 200 may assume only a specific pose (e.g., a pose of hands using a keyboard or a pose of a hand using a mouse) so that the first interface 500 is displayed on the display 140, or so that the first interface 500 displayed on the display 140 is changed to the second interface 510 , which is different from the first interface 500, and the second interface 520 is displayed Through this, the usability of the HMD device 100 of the user 200 may be enhanced.

The effects that can be obtained from the present disclosure are not limited to those described above, and other effects not mentioned herein will be clearly understood by those of ordinary skill in the art to which the present disclosure belongs.

FIG. 6 is a diagram illustrating an operation of displaying an interface corresponding to a detected pose of a user, according to an embodiment of the present disclosure.

Referring to FIGS. 1, 3, 4, and 6, in an embodiment, the at least one processor 190 may execute instructions or program code of the image obtaining module 181 to obtain an image of the user captured through the second camera 120. Although FIG. 6 illustrates capturing an image of the user through the second camera 120, the present disclosure is not limited thereto. Depending on the location of the user's motion to be captured, the arrangement of the camera 130, and the performance of the camera 130, the user's motion may be captured through the first camera 110 or another camera.

In an embodiment, the at least one processor 190 may execute instructions or program code of the pose detection module 182 to detect feature points 600 and 610 of the user included in the obtained image. In an embodiment, when the obtained image includes the user's hand, the at least one processor 190 may detect feature points 600 and 610 of the user's hand.

In an embodiment, the at least one processor 190 may execute the instructions or program code of the pose detection module 182 to detect a pose of the user 200 based on the detected feature points 600 and 610.

In an embodiment, when the second camera 120 captures an image of a motion of the user's hand typing on a keyboard, the detected feature points may be first feature points 600. In an embodiment, the at least one processor 190 may execute the instructions or program code of the pose detection module 182 to detect a pose of the user based on the detected first feature points 600. In an embodiment, the pose detected from the first feature points 600 may be referred to as a first pose 410.

In an embodiment, the at least one processor 190 may execute instructions or program code of the pose comparison module 183 to compare the detected first pose 410 with a plurality of preset poses. The at least one processor 190 may determine that the detected first pose 410 corresponds to one of the plurality of preset poses, set as a pose of a hand typing on a keyboard.

In an embodiment, the at least one processor 190 may execute the instructions or program code of the pose comparison module 183 to determine that the detected first pose 410 corresponds to a pose of a hand typing on a keyboard among the plurality of preset poses, and determine an interface corresponding to the detected first pose 410 as a keyboard 500.

In an embodiment, when no interface is displayed through the display 140, the at least one processor 190 may execute instructions or program code of the interface display module 187 to display the keyboard 500 through the display 140.

In an embodiment, when an interface is displayed through the display 140, the at least one processor 190 may execute instructions or program code of the interface comparison module 184 to determine whether the interface displayed through the display 140 is the same as the keyboard 500.

In an embodiment, when the interface displayed through the display 140 is different from the keyboard 500, the at least one processor 190 may change the interface displayed through the display 140 to the keyboard 500 and display the keyboard 500. When the interface displayed through the display 140 is the keyboard 500, the at least one processor 190 may maintain display of the keyboard 500 on the display 140.

In an embodiment, when the second camera 120 captures an image of a motion of the user's hand drawing using a pen, the detected feature points may be second feature points 610. In an embodiment, the at least one processor 190 may execute the instructions or program code of the pose detection module 182 to detect a pose of the user based on the detected second feature points 610. In an embodiment, the pose detected from the second feature points 600 may be referred to as a second pose 420.

In an embodiment, FIG. 6 illustrates the user holding a pen and performing a drawing motion, but the present disclosure is not limited thereto. The user may draw a picture by holding not only a pen but also a rod-shaped object. Furthermore, the user may assume a drawing posture with a pen even without holding any object. In this case, an image of the pen may be displayed through the display 140 and provided to the user 200.

In an embodiment, the at least one processor 190 may execute the instructions or program code of the pose comparison module 183 to determine that the detected second pose 420 corresponds to one of the plurality of preset poses, set as a pose of a hand drawing using a pen.

In an embodiment, the at least one processor 190 may execute the instructions or program code of the pose comparison module 183 to determine that the detected second pose 420 corresponds to a pose of a hand drawing using a pen among the plurality of preset poses, and determine an interface corresponding to the detected second pose 420 as a drawing pad 510.

In an embodiment, when an interface is displayed through the display 140, the at least one processor 190 may execute instructions or program code of the interface comparison module 184 to determine whether the interface displayed through the display 140 is the same as the drawing pad 510.

In an embodiment, when the interface displayed through the display 140 is the keyboard 500, the at least one processor 190 may change the keyboard 500 displayed through the display 140 to the drawing pad 510 and display the drawing pad 510.

FIG. 7 is a flowchart illustrating an operation of determining an interface location based on a spatial map generated through a camera and a detected pose, according to an embodiment of the present disclosure. Hereinafter, the same reference numerals will be assigned to the same operations as those described with reference to FIG. 4, and repeated descriptions are omitted.

Referring to FIGS. 1, 3, 4, 6, and 7, in an embodiment, the operation method of the HMD device 100 may include an operation of obtaining a spatial image by capturing an image of the space 1000 including the HMD device 100 through the camera 130 (S610).

In an embodiment, in operation S610 of obtaining the spatial image, the at least one processor 190 may execute instructions or program code of the image obtaining module 181 to obtain a spatial image by capturing an image of the space 1000 including the HMD device 100 through the camera 130.

In an embodiment, operation S610 of obtaining the spatial image may be performed after it is determined, during operation S500 of comparing the first interface 500 displayed on the display 140 with the second interface 510 corresponding to the one pose, that the first interface 500 and the second interface 510 are different interfaces. However, the present disclosure is not limited thereto. Operation S610 of obtaining the spatial image may be performed together with operation S100 of obtaining an image by capturing an image of a motion of the user, or may be performed before operation S500 of comparing the first interface 500 with the second interface 510.

In an embodiment, the operation method of the HMD device 100 may include an operation of generating a spatial map representing the space 1000 based on the obtained spatial image (S620). In an embodiment, in operation S620 of generating the spatial map, the at least one processor 190 may execute instructions or program code of the spatial map generation module 185 to generate the spatial map representing the space 1000 based on the spatial image .

In an embodiment, the operation method of the HMD device 100 may include an operation of determining, based on the generated spatial map and the detected pose, an interface location where an interface is to be displayed (S630). In an embodiment, in operation S630 of determining the interface location, an interface location where the second interface 510 corresponding to the detected second pose 420 is to be displayed may be determined. However, the present disclosure is not limited thereto, and when the first interface 500 is also displayed in response to the detected pose of the user, in operation S630 of determining an interface location where an interface is to be displayed, an interface location where the first interface 500 corresponding to the detected first pose 410 is to be displayed may be determined.

In an embodiment, in operation S630 of determining the interface location where the interface is to be displayed, the at least one processor 190 may execute instructions or program code of the location determination module 186 to determine the interface location where the interface is to be displayed. The at least one processor 190 may execute the instructions or program code of the location determination module 186 to determine at least one of the interface location where the first interface 500 is to be displayed or the interface location where the second interface 510 is to be displayed.

In an embodiment, the operation method of the HMD device 100 may include operation S640 of displaying, through the display 140, the interface at the determined interface location (S640).

In an embodiment, in operation S640 of displaying the interface at the determined interface location, the second interface 510 may be displayed at an interface location determined to display the second interface 510 through the display 140. However, the present disclosure is not limited thereto, and in operation S640 of displaying the interface at the determined interface location, the first interface 500 may be displayed at an interface location determined to display the first interface 500 through the display 140.

In an embodiment, in operation S640 of displaying the interface at the determined interface location, the at least one processor 190 may execute instructions or program code of the interface display module 187 to display the first interface 500 or the second interface 510 at the determined interface location.

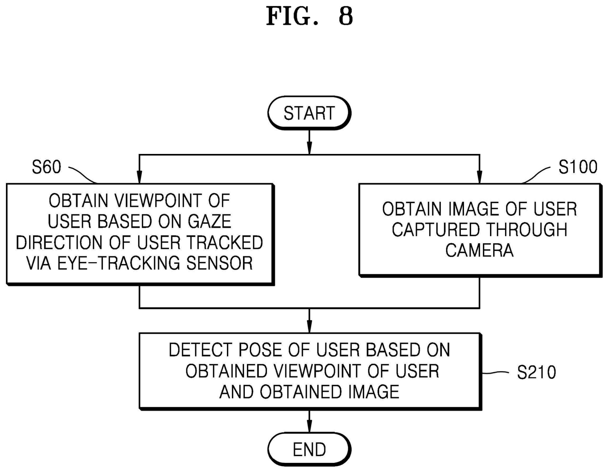

FIG. 8 is a flowchart illustrating an operation of obtaining a viewpoint of a user via an eye-tracking sensor and detecting a pose of the user based on the obtained viewpoint and an obtained image, according to an embodiment of the present disclosure. Hereinafter, the same reference numerals will be assigned to the same operations as those described with reference to FIG. 4, and descriptions already provided above are omitted.

Referring to FIGS. 1, 3, 4, and 8, in an embodiment, the operation method of the HMD device 100 may include an operation of obtaining a viewpoint of the user based on a gaze direction of the user tracked via the eye-tracking sensor 160 (S60).

In an embodiment, in operation S60 of obtaining the viewpoint of the user, a point at which gazes of the two eyes 201 and 202 of the user intersect may be calculated based on the obtained gaze direction of the user, and the corresponding point may be obtained as a viewpoint. In an embodiment, in operation S60 of obtaining the viewpoint of the user, a distance between the HMD device 100 and the surrounding environment and the viewpoint of the user may be obtained based on an image obtained through the camera 130 and the obtained gaze direction of the user.

In an embodiment, in operation S60 of obtaining the viewpoint of the user, the at least one processor 190 may execute instructions or program code for obtaining a viewpoint of the user to obtain the viewpoint of the user based on the gaze direction of the user.

In an embodiment, the operation method of the HMD device 100 may include an operation of detecting a pose of the user based on the obtained viewpoint of the user and the obtained image (S210). In an embodiment, in operation S210 of detecting the pose of the user, the pose of the user may be detected based on the viewpoint of the user obtained in operation S60 and the image obtained in operation S100.

In an embodiment, the at least one processor 190 may execute instructions or program code of the pose detection module 182 to detect a pose of the user based on the obtained viewpoint of the user and the obtained image. In an embodiment, the at least one processor may determine that there is a motion of the user to be detected in a region of the obtained image where the obtained viewpoint of the user is located, and detect a pose of the user in the obtained image by assigning a relatively high weight to the region.

In an embodiment, when the user is performing a motion of typing on a keyboard with his or her hand, and the gaze of the user is directed toward the hand performing the motion of typing on the keyboard, the obtained viewpoint of the user may correspond to a region of the obtained image where the hand is present, such that the hand performing the motion of typing on the keyboard is included. In this case, the at least one processor 190 may detect the pose of the user by focusing on the user's hand within the obtained image.

FIG. 9 is a flowchart illustrating an operation of determining a content location for displaying second content, based on a viewpoint of a user obtained via an eye-tracking sensor, according to an embodiment of the present disclosure. The same reference numerals will be assigned to the same operations as those described with reference to FIG. 8, and repeated descriptions are omitted.

Referring to FIGS. 1, 3, and 9, in an embodiment, after operation S60 of obtaining the viewpoint of the user, the operation method of the HMD device 100 may include an operation of determining, based on the obtained viewpoint of the user, a content location where content that shows a user input obtained via an interface is to be displayed (S800).

In an embodiment, for description, content showing a user input obtained via an interface is referred to as 'second content'.

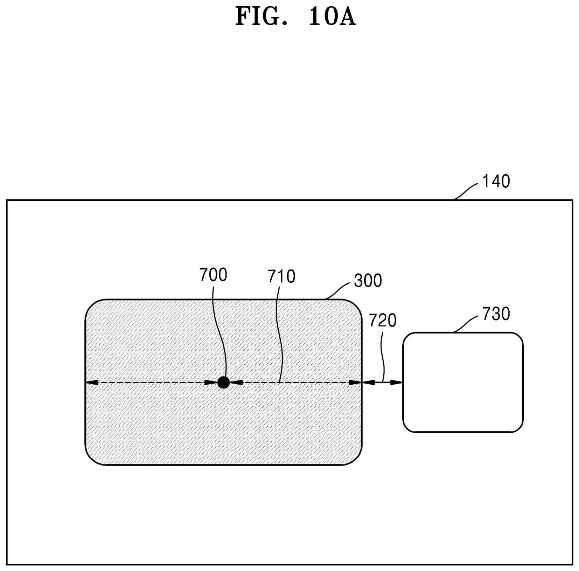

In an embodiment, second content (730 of FIG. 10A) may be content showing a user input entered by the user via an interface. The second content 730 may be content that shows a user input entered by the user via at least one of the first interface 500 or the second interface 510. In an embodiment, the second content 730 may include, but is not limited to, a notepad, notes, or a mouse cursor.

In an embodiment, the second content 730 displayed through the display 140 may show a user input entered by the user 200 via the interface. The user 200 may confirm a user input he or she has entered via the second content 730 displayed through the display 140, thereby enhancing user convenience.

In an embodiment, in operation S800 of determining, based on the obtained viewpoint of the user, the content location where the second content 730 is to be displayed, the content location for displaying the second content 730 may be determined based on the obtained viewpoint of the user. In an embodiment, in operation S800 of determining, based on the obtained viewpoint of the user, the content location where the second content 730 is to be displayed, the content location for displaying the second content 730 may be determined based on the obtained viewpoint of the user and the first content 300 displayed on the display 140.

In an embodiment, in operation S800 of determining the content location where the second content 730 is to be displayed based on the obtained viewpoint of the user, the at least one processor 190 may execute instructions or program code of the location determination module 186 to determine, based on the obtained viewpoint of the user, the content location where the second content 730 is to be displayed.

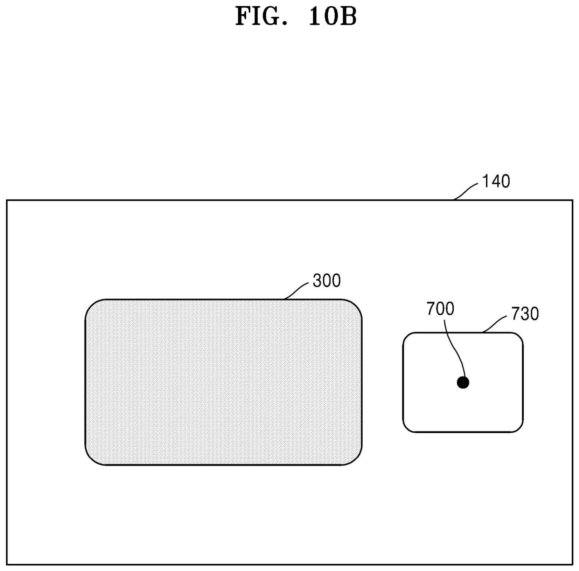

The operation of determining the content location where the second content 730 is to be displayed is described in detail below with reference to FIGS. 10A and 10B.

In an embodiment, the operation method of the HMD device 100 may include an operation of displaying, through the display 140, the second content 730 at the determined content location (S900). In an embodiment, in operation S900 of displaying, through the display 140, the second content 730 at the determined content location, the at least one processor 190 may execute instructions or program code for displaying the second content 730 through the display 140 to display the second content 730 at the determined content location.

In an embodiment, operation S800 of determining the content location where second content 730 is to be displayed and operation S900 of displaying, through the display 140, the second content 730 at the content location may be performed together with the operation of displaying at least one of the first interface 500 or the second interface 510 through the display 140.

In an embodiment, the at least one processor 190 may determine an interface location where at least one of the first interface 500 or the second interface 510 is to be displayed, and determine a content location where the second content 730 is to be displayed. The at least one processor 190 may, through the display 140, display at least one of the first interface 500 or the second interface 510 at the determined interface location, and display the second content 730 at the determined content location.

FIG. 10A is a diagram illustrating an operation of determining a content location for displaying second content, based on a viewpoint of a user obtained via an eye-tracking sensor, according to an embodiment of the present disclosure. FIG. 10B is a diagram illustrating an operation of determining a content location for displaying second content, based on a viewpoint of a user obtained via an eye-tracking sensor, according to an embodiment of the present disclosure.

Referring to FIGS. 1, 3, and 10A, in an embodiment, FIG. 10A illustrates the first content 300 and second content 730 displayed through the display 140.

In an embodiment, FIG. 10A illustrates that an obtained viewpoint 700 of the user overlaps with the first content 300. In an embodiment, the user 200 may perform a specific motion by using a body structure, such as a hand, while viewing the first content 300. In an embodiment, while viewing the first content 300, the user 200 may assume a pose of typing on a keyboard with a hand, a pose of moving a mouse, or a pose of drawing using a pen.

In an embodiment, the at least one processor 190 may display, through the display 140, an interface (e.g., a keyboard, a mouse, a drawing pad, or the like) corresponding to a pose detected based on the user's motion at the determined interface location.

In an embodiment, the at least one processor 190 may display, on the display 140, the second content 730 that shows a user input provided by the user via the interface displayed through the display 140. In this case, the at least one processor 190 may execute instructions or program code of the location determination module 186 to determine a content location where the second content 730 is to be displayed, such that the second content 730 is displayed without overlapping the first content 300.

In an embodiment, the at least one processor 190 may execute instructions or program code of the location determination module 186 to calculate a first distance 710 from the obtained viewpoint 700 of the user to a region adjacent to the first content 300. In an embodiment, the first distance 710 may be the shortest distance from the obtained viewpoint 700 of the user to a region that does not overlap with the first content 300.

In an embodiment, the at least one processor 190 may execute instructions or program code of the location determination module 186 to calculate a value obtained by adding the calculated first distance 710 and a preset second distance 720 to the obtained viewpoint 700 of the user. In this case, the preset second distance 720 may be a distance preset such that the first content 300 and the second content 730 are displayed spaced apart from each other on the display 140, so that the first content 300 and the second content 730 are distinguished from each other.

In an embodiment, the at least one processor 190 may determine a content location where the second content 730 is to be displayed, based on a value calculated by adding the calculated first distance 710 and the preset second distance 720 to the obtained viewpoint 700 of the user.

Through this, it is possible to confirm a user input entered by the user 200 via the interface without interfering with the user experience of the user 200 viewing the first content 300 displayed through the display 140.

In this case, FIG. 10A illustrates that the second content 730 is displayed to the right of the first content 300 on the display 140, and the first distance 710 is illustrated as the shortest distance in the rightward direction from the obtained viewpoint 700 of the user to the region not overlapping with the first content 300. However, the present disclosure is not limited thereto, and the second content 730 may also be displayed on the left of, above, below, or diagonally to the first content 300. In this case, the first distance 710 may be the shortest distance from the obtained viewpoint 700 of the user toward a direction in which the second content 730 is displayed relative to the first content 300.

In an embodiment, the direction in which the second content 730 is displayed relative to the first content 300 may be set based on at least one of the type, shape, and size of the first content 300, the type, shape, and size of the second content 730, and the shape or size of the display 140.

Referring to FIGS. 10A and 10B, in an embodiment, FIG. 10B illustrates that the obtained viewpoint 700 of the user does not overlap with the first content 300. In an embodiment, the user 200 may perform a specific motion by using a hand or the like while looking at a region other than the first content 300.

In an embodiment, the at least one processor 190 may execute instructions or program code of the location determination module 186 to determine a content location where the second content 730 is to be displayed, based on the obtained viewpoint 700 of the user. In this case, when it is determined, based on the preset second distance 720, that the second content 730 displayed based on the obtained viewpoint 700 of the user overlaps with the first content 300, the at least one processor 190 may determine a content location where the second content 730 is to be displayed, based on a value obtained by adding the second distance 720 to the obtained viewpoint 700 of the user.

However, the present disclosure is not limited thereto. In an embodiment, the at least one processor 190 may execute instructions or program code of the location determination module 186 to determine a content location where the second content 730 is to be displayed, such that the second content 730 is displayed overlapping the first content 300 based on at least one of the type, shape, and size of the first content 300, the type, shape, or size of the second content 730, or the shape or size of the display 140.

FIG. 11A is a diagram illustrating an operation of displaying first content and second content, according to an embodiment of the present disclosure. FIG. 11B is a diagram illustrating an operation of displaying first content and second content, according to an embodiment of the present disclosure. FIG. 11C is a diagram illustrating an operation of displaying first content and second content, according to an embodiment of the present disclosure. Hereinafter, components identical to those described with reference to FIG. 1 will be assigned the same reference numerals, and repeated descriptions are omitted.

Referring to FIGS. 1, 10A, and 11A, in an embodiment, FIG. 11A illustrates the HMD device 100 detecting a pose 400 of the user typing on a keyboard, and displaying the keyboard 500 through the display 140 based on the detected pose 400 and providing the keyboard 500 to the user 200.

In an embodiment, the HMD device 100 may display, through the display 140, second content 730 showing a user input provided by the user 200 using the keyboard 500, in addition to the first content 300 and the keyboard 500. In an embodiment, even when the user 200 provides a user input while viewing the first content 300 without looking at the keyboard 500, the user 200 may confirm the user input entered by the user through the second content 730 displayed adjacent to the first content 300.

In an embodiment, the user 200 may experience the first content 300, the second content 730, and the keyboard 500 displayed on the display 140 as being within the real-world space 1000. In an embodiment, FIG. 11A illustrates first virtual content 301, second virtual content 731, and a virtual keyboard 501 that, as experienced by the user 200 through the HMD device 100, cause the first content 300, the second content 730, and the keyboard 500 displayed on the display 140 in the field of view of the user 200 to appear to be located in the real-world space 1000 or overlaid on a real-world object.

In an embodiment, even when the user 200 assumes a pose of typing on a keyboard while looking at the first content 300, the HMD device 100 may detect the pose 400 of the user through the second camera 120 and display the keyboard 500, which is an interface corresponding to the detected pose 400, through the display 140. Referring to FIGS. 1, 10A, 11A, and 11B, in an embodiment, FIG. 11B illustrates the HMD device 100 detecting a pose 410 of the user drawing using a pen, and displaying the drawing pad 510 through the display 140 based on the detected pose 410 and providing the drawing pad 510 to the user 200.

In an embodiment, the HMD device 100 may display, through the display 140, third content 740 showing a user input provided by the user 200 using the drawing pad 510, in addition to the first content 300 and the drawing pad 510. In an embodiment, even when the user 200 provides a user input while viewing the first content 300 without looking at the drawing pad 510, the user 200 may confirm the user input entered through the third content 740 displayed adjacent to the first content 300.

In an embodiment, even when the user 200 assumes a pose of drawing using a pen while looking at the first content 300, the HMD device 100 may detect the pose 410 of the user through the second camera 120 and display the drawing pad 510, which is an interface corresponding to the detected pose 410, through the display 140.

In an embodiment, as compared to FIG. 11A, when the interface corresponding to the detected pose 410 is determined to be the drawing pad 510, the HMD device 100 may change the keyboard 500 displayed through the display 140 to the drawing pad 510 and display the drawing pad 510. Through this, the user 200 may change his or her pose to correspond to one of a plurality of preset poses while using the first content 300, so that the HMD device 100 may provide a desired interface.

In an embodiment, the user 200 may experience the first content 300, the third content 740, and the drawing pad 510 displayed on the display 140 as being located within the real-world space 1000. In an embodiment, FIG. 11B illustrates the first virtual content 301, third virtual content 741, and a virtual drawing pad 511 that, as experienced by the user 200 through the HMD device 100, cause the first content 300, the third content 740, and the drawing pad 510 displayed on the display 140 in the field of view of the user 200 to appear to be located in the real-world space 1000 or overlaid on a real-world object.

Referring to FIGS. 1, 10A, 11A, and 11C, in an embodiment, FIG. 11C illustrates the HMD device 100 detecting a pose 420 of the user controlling a mouse cursor by using a touchpad, and displaying the touchpad 520 through the display 140 based on the detected pose 420 and providing the touchpad 520 to the user 200.

In an embodiment, the HMD device 100 may display, through the display 140, fourth content 750 showing a user input provided by the user 200 using the touchpad 520, in addition to the first content 300 and the touchpad 520. In an embodiment, even when the user 200 provides a user input while viewing the first content 300 without looking at the touchpad 520, the user 200 may confirm the user input entered through the fourth content 750 displayed adjacent to the first content 300. In an embodiment, the fourth content 750 may be a mouse cursor controlled by the user input provided by the user 200 through the touchpad 520. In an embodiment, the fourth content 750 may be displayed overlapping the first content 300.

In an embodiment, even when the user 200 assumes a pose of controlling a mouse cursor by using a touchpad while viewing the first content 300, the HMD device 100 may detect the pose of the user through the second camera 120 and display the touchpad 520, which is an interface corresponding to the detected pose 420, through the display 140.

In an embodiment, as compared to FIG. 11A, when the interface corresponding to the detected pose 420 is determined to be the touchpad 520, the HMD device 100 may change the keyboard 500 displayed through the display 140 to the touchpad 520 and display the touchpad 520. Through this, the user 200 may change his or her pose to correspond to one of a plurality of preset poses while using the first content 300, so that the HMD device 100 may provide a desired interface.

In an embodiment, the user 200 may experience the first content 300, the fourth content 750, and the touchpad 520 displayed on the display 140 as being located within the real-world space 1000. In an embodiment, FIG. 11C illustrates the first virtual content 301, fourth virtual content 751, and a virtual touchpad 521 that, as experienced by the user 200 through the HMD device 100, cause the first content 300, the fourth content 750, and the touchpad 520 displayed on the display 140 in the field of view of the user 200 to appear to be located in the real-world space 1000 or overlaid on a real-world object.

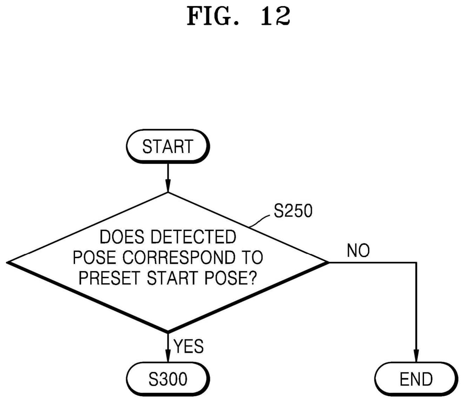

FIG. 12 is a diagram illustrating whether to perform an operation of comparing a detected pose with a plurality of preset poses by comparing the detected pose with a preset start pose, according to an embodiment of the present disclosure. Hereinafter, the same reference numerals will be assigned to the same operations as those described with reference to FIG. 4, and repeated descriptions are omitted.

Referring to FIGS. 1, 3, 4, and 12, in an embodiment, the operation method of the HMD device 100 may include an operation of comparing the detected pose 400 with a preset start pose (S250). In an embodiment, operation S250 of comparing the detected pose 400 with the preset start pose may be performed after operation S200 of detecting the pose of the user.

In an embodiment, the at least one processor 190 may execute instructions or program code of the pose comparison module 183 to compare the detected pose 400 with the preset start pose.

In an embodiment, the 'start pose' may be a preset pose used to determine whether to execute an operation of the HMD device 100 for comparing the detected pose 400 with the plurality of preset poses and displaying, through the display 140, the interface 500 corresponding to the detected pose 400.

In an embodiment, the 'start pose' may be set as a pose that is unrelated to a pose of using an interface, rather than a pose taken by the user to provide a user input via the interface. In an embodiment, the 'start pose' may include a pose in which the user 200 forms a hand into a shape as if gripping a mouse and moves their index finger twice, a pose in which fingers form a specific shape, or a pose in which the user touches the nose with a hand.

In an embodiment, when it is determined in operation S250 of comparing the detected pose 400 with the preset start pose that the detected pose 400 corresponds to the preset start pose, the operation method of the HMD device 100 may include performing operation S300 of comparing the detected pose 400 with the at least one preset pose.

In an embodiment, when it is determined in operation S250 of comparing the detected pose 400 with the preset start pose that the detected pose 400 does not correspond to the preset start pose, the operation method of the HMD device 100 may include terminating the operation.

Through this, when the user 200 wishes to receive an interface via the HMD device 100, the user 200 may first assume a pose corresponding to the start pose, and then assume a pose corresponding to the interface that the user wishes to receive, so that the interface may be displayed through the display 140. Therefore, the interface may be provided according to the intention of the user 200, thereby enhancing the convenience of the user 200.

Furthermore, even when the user 200 unconsciously assumes a pose corresponding to a specific interface while using the HMD device 100, the interface may be prevented from being displayed through the display 140 unless the user 200 has assumed the start pose, thereby preventing unintentional disruption to usage experience of the user 200 .

The effects that can be obtained from the present disclosure are not limited to those described above, and other effects not mentioned herein will be clearly understood by those of ordinary skill in the art to which the present disclosure belongs.

To solve the technical problems described above, according to an embodiment, an HMD device is provided. The HMD device may include a camera. The HMD device may include a display. The HMD device may include memory storing at least one instruction and at least one processor. The at least one processor may be configured to execute the at least one instruction to cause the HMD device to display a first interface through the display. The at least one processor may be configured to execute the at least one instruction to cause the HMD device to obtain an image of a user captured through the camera. The at least one processor may be configured to execute the at least one instruction to cause the HMD device to detect a pose of the user based on the obtained image. The at least one processor may be configured to execute the at least one instruction to cause the HMD device to compare the detected pose with a plurality of poses respectively preset to correspond to a plurality of interfaces. The at least one processor may be configured to execute the at least one instruction to cause the HMD device to, based on the detected pose corresponding to a second interface that is one of the plurality of interfaces, display the second interface through the display by replacing the first interface.

In an embodiment, the at least one processor may be configured to execute the at least one instruction to cause the HMD device to compare the first interface with the second interface. The at least one processor may be configured to execute the at least one instruction to cause the HMD device to, based on a determination that the first interface and the second interface are different interfaces, display the second interface through the display by replacing the first interface.

In an embodiment, the at least one processor may be configured to execute the at least one instruction to cause the HMD device to maintain the first interface displayed through the display based on a determination that the detected pose is different from the plurality of preset poses or that the first interface and the second interface are the same interface.

In an embodiment, the at least one processor may be configured to execute the at least one instruction to cause the HMD device to display first content through the display. The at least one processor may be configured to execute the at least one instruction to cause the HMD device to display the first interface and the second interface through the display while the first content is displayed.

In an embodiment, the at least one processor may be configured to execute the at least one instruction to cause the HMD device to obtain a spatial image by capturing, through the camera, an image of a space 1000 including the HMD device. The at least one processor may be configured to execute the at least one instruction to cause the HMD device to generate a spatial map representing the space 1000 based on the obtained spatial image. The at least one processor may be configured to execute the at least one instruction to cause the HMD device to determine, based on the generated spatial map and the detected pose, an interface location where the second interface is to be displayed. The at least one processor may be configured to execute the at least one instruction to cause the HMD device to display the second interface at the interface location through the display.

In an embodiment, the HMD device may further include an eye-tracking sensor configured to track a gaze direction of the user. The at least one processor may be configured to execute the at least one instruction to cause the HMD device to obtain a viewpoint of the user based on the gaze direction.

In an embodiment, the at least one processor may be configured to execute the at least one instruction to cause the HMD device to detect the pose of the user based on the obtained viewpoint of the user and the obtained image.

In an embodiment, the at least one processor may be configured to execute the at least one instruction to cause the HMD device to determine, based on the obtained viewpoint of the user, a content location where second content that shows a user input obtained via at least one of the first interface or the second interface is to be displayed. The at least one processor may be configured to execute the at least one instruction to cause the HMD device to display the second content at the content location through the display.

In an embodiment, the first interface may be an interface displayed on the display based on the detected pose corresponding to one of the plurality of preset poses that is set to correspond to the first interface. The pose set to correspond to the first interface and a pose set to correspond to the second interface may be different gestures.

In an embodiment, the at least one processor may be configured to execute the at least one instruction to cause the HMD device to compare the detected pose with a preset start pose. The at least one processor may be configured to execute the at least one instruction to cause the HMD device to, based on the detected pose corresponding to the preset start pose, compare the detected pose with the plurality of preset poses.

To solve the technical problems described above, according to an embodiment, an operation method of an HMD device is provided. The operation method of the HMD device may include obtaining an image of a user captured through a camera. The operation method of the HMD device may include detecting a pose of the user based on the obtained image. The operation method of the HMD device may include comparing the detected pose with a plurality of poses respectively preset to correspond to a plurality of interfaces. The operation method of the HMD device may include, based on the detected pose corresponding to a second interface that is one of the plurality of interfaces, displaying the second interface through a display by replacing the first interface.

In an embodiment, the operation method of the HMD device may include comparing the first interface with the second interface. Based on a determination that the first interface and the second interface are different interfaces in the comparing of the first interface with the second interface, the displaying of the second interface through the display may include displaying the second interface through the display by replacing the first interface.

In an embodiment, the operation method of the HMD device may include maintaining the first interface displayed through the display based on the detected pose being different from the plurality of preset poses in the comparing of the detected pose with the plurality of preset poses, or based on a determination that the first interface and the second interface are the same in the comparing of the first interface with the second interface.

In an embodiment, the operation method of the HMD device may include displaying first content through the display. The operation method of the HMD device may include displaying the first interface and the second interface through the display while the first content is displayed.

In an embodiment, the operation method of the HMD device may include obtaining a spatial image by capturing, through the camera, an image of a space 1000 including the HMD device. The operation method of the HMD device may include generating a spatial map representing the space 1000 based on the obtained spatial image. The operation method of the HMD device may include determining, based on the generated spatial map and the detected pose, an interface location where the second interface is to be displayed. The operation method of the HMD device may include displaying the second interface at the interface location through the display.

In an embodiment, the operation method of the HMD device may include obtaining a viewpoint of the user based on a gaze direction tracked via an eye-tracking sensor. The detecting of the pose may include detecting the pose of the user based on the obtained viewpoint of the user and the obtained image.

In an embodiment, the operation method of the HMD device may include determining, based on the obtained viewpoint of the user, a content location where second content that shows a user input obtained via at least one of the first interface or the second interface is to be displayed. The operation method of the HMD device may include displaying the second content at the content location through the display.

In an embodiment, the operation method of the HMD device may include comparing the detected pose with a preset start pose. The operation method of the HMD device may include, based on the detected pose corresponding to the preset start pose, comparing the detected pose with the plurality of preset poses.

To solve the technical problems, there is provided a computer-readable recording medium having recorded thereon a program for performing, on a computer, at least one of the operation methods of the HMD device according to the disclosed embodiments.

A program executed by an HMD device described in the present disclosure may be implemented as a hardware component, a software component, and/or a combination of the hardware component and the software component. A program may be executed by any system capable of executing computer-readable instructions.

Software may include a computer program, a piece of code, an instruction, or a combination of one or more thereof, and configure a processing device to operate as desired or instruct the processing device independently or collectively.

The software may be implemented as a computer program including instructions stored in computer-readable storage media. Examples of the computer-readable recording media include magnetic storage media (e.g., ROM, RAM, floppy disks, hard disks, etc.), optical recording media (e.g., compact disc (CD)-ROM, a digital versatile disc (DVD), etc.), etc. The computer-readable recording media may be distributed over computer systems connected through a network so that computer-readable code may be stored and executed in a distributed manner. The recording media may be read by a computer, stored in memory, and executed by a processor.

A computer-readable storage medium may be provided in the form of a non-transitory storage medium. In this regard, the term 'non-transitory' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer in which data is temporarily stored.

Furthermore, programs according to embodiments set forth in the present specification may be included in a computer program product when provided. The computer program product may be traded, as a product, between a seller and a buyer.

The computer program product may include a software program and a computer-readable storage medium having the software program stored thereon. For example, the computer program product may include a product (e.g., a downloadable application) in the form of a software program electronically distributed by a manufacturer of the HMD device 100 or through an electronic market (e.g., Samsung Galaxy Store^{™}). For such electronic distribution, at least a part of the software program may be stored on the storage medium or may be temporarily generated. In this case, the storage medium may be a storage medium of a server of a manufacturer of the HMD device 100, a server of the electronic market, or a relay server for temporarily storing the software program.

## Claims

1. A head-mounted display device (100) comprising:
a camera (130);
a display (140);
memory (180) storing at least one instruction; and
at least one processor (190),
wherein the at least one processor (190) is configured to execute the at least one instruction to cause the head-mounted display device (100) to display a first interface (500) through the display (140),
obtain an image of a user captured through the camera (130),
detect a pose of the user based on the obtained image,
compare the detected pose with a plurality of poses respectively preset to correspond to a plurality of interfaces, and
based on the detected pose corresponding to a second interface (510) that is one of the plurality of interfaces, display the second interface (510) through the display (140) by replacing the first interface (500).

2. The head-mounted display device (100) of claim 1, wherein
the at least one processor (190) is further configured to execute the at least one instruction to cause the head-mounted display device (100) to compare the first interface (500) with the second interface (510), and based on a determination that the first interface (500) and the second interface (510) are different interfaces, display the second interface (510) through the display (140) by replacing the first interface (500).

3. The head-mounted display device (100) of claim 2, wherein the at least one processor (190) is further configured to execute the at least one instruction to cause the head-mounted display device (100) to, based on a determination that the detected pose is different from the plurality of preset poses or that the first interface (500) and the second interface (510) are the same interface, maintain the first interface (500) displayed through the display (140).

4. The head-mounted display device (100) of claim 1, wherein
the at least one processor (190) is further configured to execute the at least one instruction to cause the head-mounted display device (100) to display first content through the display (140), and
display the first interface (500) and the second interface (510) through the display (140) while the first content (300) is displayed.

5. The head-mounted display device (100) of any one of claims 1 to 4,
wherein the at least one processor (190) is further configured to execute the at least one instruction to cause the head-mounted display device (100) to
obtain a spatial image by capturing, through the camera (130), an image of a space including the head-mounted display device (100),
generate a spatial map representing the space based on the obtained spatial image,
determine, based on the generated spatial map and the detected pose, an interface location where the second interface (510) is to be displayed, and display, through the display (140), the second interface (510) at the interface location.

6. The head-mounted display device (100) of any one of claims 1 to 5, further comprising
an eye-tracking sensor configured to track a gaze direction of the user, wherein the at least one processor (190) is further configured to execute the at least one instruction to cause the head-mounted display device (100) to
obtain a viewpoint of the user based on the gaze direction.

7. The head-mounted display device (100) of claim 6, wherein the at least one processor (190) is further configured to execute the at least one instruction to cause the head-mounted display device (100) to detect the pose of the user based on the obtained viewpoint of the user and the obtained image.

8. The head-mounted display device (100) of claim 6 or 7, wherein
the at least one processor (190) is further configured to execute the at least one instruction to cause the head-mounted display device (100) to determine, based on the obtained viewpoint of the user, a content location where second content that shows a user input obtained via at least one of the first interface (500) or the second interface (510) is to be displayed, and
display, through the display (140), the second content at the content location.

9. The head-mounted display device (100) of any one of claims 1 to 8, wherein
the first interface (500) is an interface displayed on the display (140) based on the detected pose corresponding to one of the plurality of preset poses that is set to correspond to the first interface (500), and
the pose set to correspond to the first interface (500) and a pose set to correspond to the second interface (510) are different poses.

10. The head-mounted display device (100) of any one of claims 1 to 9, wherein
the at least one processor (190) is further configured to execute the at least one instruction to cause the head-mounted display device (100) to compare the detected pose with a preset start pose, and
based on the detected pose corresponding to the preset start pose, compare the detected pose with the plurality of preset poses.

11. An operation method of a head-mounted display device, the operation method comprising:
obtaining an image of a user captured through a camera (S100);
detecting a pose of the user based on the obtained image (S200);
comparing the detected pose with a plurality of poses respectively preset to correspond to a plurality of interfaces (S300); and
based on the detected pose corresponding to a second interface that is one of the plurality of interfaces, displaying the second interface through a display by replacing the first interface (S600).

12. The operation method of claim 11, further comprising
comparing the first interface with the second interface (S500), wherein, based on a determination that the first interface and the second interface are different interfaces in the comparing of the first interface with the second interface (S500), the displaying of the second interface through the display (S600) comprises
displaying the second interface through the display by replacing the first interface.

13. The operation method of claim 12, further comprising maintaining the first interface displayed through the display based on the detected pose being different from the plurality of preset poses in the comparing of the detected pose with the plurality of preset poses (S300), or based on a determination that the first interface and the second interface are the same interface in the comparing of the first interface with the second interface (S500) (S700).

14. The operation method of claim 11, further comprising
displaying first content through the display (S50),
wherein the first interface and the second interface are displayed through the display while the first content is displayed.

15. A computer-readable recording medium having recorded thereon a program for performing, on a computer, the operation method of any one of claims 11 to 14.
